# EUROPÄISCHE PATENTANMELDUNG

(11) **EP 4 850 892 A1**
(43) Veröffentlichungstag der Anmeldung: **09.12.2026**
(21) Anmeldenummer: 25181398.6
(22) Anmeldetag: 06.06.2025
(51) Int. Cl.: B29C 64/124, A61C 13/00, B33Y 10/00, B33Y 80/00, B29C 64/245, B29C 64/255

(54) **VORRICHTUNG ZUR SCHICHTWEISEN HERSTELLUNG EINER BAUTEILKOMPONENTE, INSBESONDERE EINER DENTALRESTAURATIONSKOMPONENTE, BEHÄLTNIS, SOWIE SYSTEM UND VERFAHREN ZUR SCHICHTWEISEN HERSTELLUNG EINES MEHRKOMPONENTENBAUTEILS, INSBESONDERE EINER MEHRKOMPONENTEN-DENTALRESTAURATION**

(71) Anmelder: Ivoclar Vivadent AG, 9494 Schaan (LI)
(72) Erfinder: BAASKE, Thomas, 9450 Lüchingen (CH)
(74) Vertreter: Maiwald GmbH

(57) **Zusammenfassung**

Es wird eine Vorrichtung (12) zur schichtweisen Herstellung einer Bauteilkomponente (60), insbesondere einer Dentalrestaurationskomponente, aus photosensitivem Ausgangsmaterial (M1) beschrieben. Die Vorrichtung (12) umfasst ein Behältnis (14) zur Aufnahme des Ausgangsmaterials (M1), eine Bauplattform (16), an der die Bauteilkomponente (60) schichtweise aufbaubar ist, und eine Belichtungseinheit (20) zum ortsspezifischen Aushärten von innerhalb des Behältnisses (14) vorhandenem Ausgangsmaterial (M1). Die Bauplattform (16) und das Behältnis (14) sind relativ zueinander beweglich gelagert. Innerhalb des Behältnisses (14) oder an einem Boden (24) ist eine unebene Anschmiegfläche (26) vorhanden, die dazu ausgebildet ist, im Behältnis (14) vorhandenes Ausgangsmaterial (M1) an eine unebene Anbaufläche (58) einer Trägerkomponente (64) anzuschmiegen, sodass die Bauteilkomponente (60) schichtweise an der unebenen Anbaufläche (58) der Trägerkomponente (64) anbaubar ist. Ferner wird ein Behältnis (14) für eine solche Vorrichtung (12) vorgestellt. Zudem werden ein System (10) zur schichtweisen Herstellung eines Mehrkomponentenbauteils (54), insbesondere einer Mehrkomponenten-Dentalrestauration, und ein Verfahren erläutert.

## Beschreibung

Die Erfindung ist auf eine Vorrichtung zur schichtweisen Herstellung einer Bauteilkomponente, insbesondere einer Dentalrestaurationskomponente, aus photosensitivem Ausgangsmaterial gerichtet. Dabei umfasst die Vorrichtung ein Behältnis zur Aufnahme des Ausgangsmaterials, eine Bauplattform, an der die Bauteilkomponente schichtweise aufbaubar ist, und eine Belichtungseinheit zum ortsspezifischen Aushärten von innerhalb des Behältnisses vorhandenem Ausgangsmaterial. Die Bauplattform und das Behältnis sind relativ zueinander beweglich gelagert.

Zudem betrifft die Erfindung ein Behältnis für eine derartige Vorrichtung.

Die Erfindung ist ebenfalls auf ein System zur schichtweisen Herstellung eines Mehrkomponentenbauteils, insbesondere einer Mehrkomponenten-Dentalrestauration, aus wenigstens einem ersten photosensitiven Ausgangsmaterial und einem zweiten photosensitiven Ausgangsmaterial gerichtet.

Ferner betrifft die Erfindung ein Verfahren zur schichtweisen Herstellung eines Mehrkomponentenbauteils, insbesondere einer Mehrkomponenten-Dentalrestauration, aus wenigstens einem ersten photosensitiven Ausgangsmaterial und einem zweiten photosensitiven Ausgangsmaterial.

Vorrichtungen der eingangs genannten Art sowie Behältnisse dafür sind für sich genommen bekannt. Dabei wird zum schichtweisen Aufbau einer Bauteilkomponente, insbesondere einer Dentalrestauration, die Bauplattform oder eine oberste Schicht eines Abschnitts einer bereits an der Bauplattform angebauten Bauteilkomponente in Kontakt mit Ausgangsmaterial gebracht, das im Behälter aufgenommen ist. Sodann wird das in Behälter aufgenommene Ausgangsmaterial ortsspezifischen mittels der Belichtungseinheit belichtet, sodass dieses zumindest teilweise an der Bauplattform oder an der obersten Schicht aushärtet und somit eine nächste Schicht der Bauteilkomponente bildet. Ein derartiges Verfahren zum schichtweisen Herstellen einer Bauteilkomponente kann beispielsweise ein Stereolithografie-Verfahren sein.

Es ist in diesem Zusammenhang ebenfalls bekannt, Mehrkomponentenbauteile, insbesondere Mehrkomponenten-Dentalrestaurationen, aus wenigstens einem ersten photosensitiven Ausgangsmaterial und einem zweiten photosensitiven Ausgangsmaterial herzustellen. Dafür werden zumindest zwei Behältnisse benötigt, wobei in jedem Behältnis eines der photosensitiven Ausgangsmaterialien bereitgestellt wird. Die Behältnisse können zu unterschiedlichen Vorrichtungen zur schichtweisen Herstellung einer Bauteilkomponente gehören. Alternativ können die wenigstens zwei Behältnisse Bestandteile derselben Vorrichtung sein. Soll in diesem Zusammenhang eine Bauteilschicht hergestellt werden, die sowohl das erste Ausgangsmaterial als auch das zweite Ausgangsmaterial umfasst, so wird mittels eines der wenigstens zwei Behältnisse ein Abschnitt der Bauteilschicht aus dem ersten Ausgangsmaterial hergestellt und mittels des anderen Behältnisses ein Abschnitt der Bauteilschicht aus dem zweiten Ausgangsmaterial hergestellt. Zwischen der Herstellung des Abschnitts der Bauteilschicht aus dem ersten Ausgangsmaterial und der Herstellung des Abschnitts der Bauteilschicht aus dem zweiten Ausgangsmaterial muss das sich in Herstellung befindlichen Bauteil gereinigt werden, um überschüssiges unausgehärtetes Ausgangsmaterial zu entfernen und eine unerwünschte Mischung der unterschiedlichen Ausgangsmaterialien zu vermeiden. Mit anderen Worten muss für jede Bauteilschicht nach der Herstellung eines Abschnitts aus einem der Ausgangsmaterialien ein Reinigungsschritt stattfinden.

Die Aufgabe der vorliegenden Erfindung besteht somit darin, eine Herstellung eines Mehrkomponentenbauteils, insbesondere einer Mehrkomponenten-Dentalrestauration, weiter zu vereinfachen.

Die Aufgabe wird durch eine Vorrichtung zur schichtweisen Herstellung einer Bauteilkomponente, insbesondere einer Dentalrestaurationskomponente, aus photosensitivem Ausgangsmaterial gelöst. Dabei umfasst die Vorrichtung ein Behältnis zur Aufnahme des Ausgangsmaterials, eine Bauplattform, an der die Bauteilkomponente schichtweise aufbaubar ist, und eine Belichtungseinheit zum ortsspezifischen Aushärten von innerhalb des Behältnisses vorhandenem Ausgangsmaterial. Die Bauplattform und das Behältnis sind relativ zueinander beweglich gelagert. Ferner ist innerhalb des Behältnisses oder an einem Boden des Behältnisses eine unebene Anschmiegfläche vorhanden, die dazu ausgebildet ist, im Behältnis vorhandenes Ausgangsmaterial an eine unebene Anbaufläche einer Trägerkomponente, insbesondere einer weiteren Dentalrestaurationskomponente, anzuschmiegen, sodass die Bauteilkomponente schichtweise an der unebenen Anbaufläche der Trägerkomponente anbaubar ist. Dabei wird unter dem Anschmiegen von Ausgangsmaterial an die unebene Anbaufläche verstanden, dass die Anschmiegfläche und die unebene Anbaufläche einander angenähert oder aufeinander aufgesetzt werden können und dabei die Anschmiegfläche und die unebene Anbaufläche einander folgen. Mit anderen Worten verlaufen die Anschmiegfläche und unebene Anbaufläche im Wesentlichen parallel. Bevorzugt sind dabei die Anschmiegfläche und die unebene Anbaufläche derart aufeinander abgestimmt, dass die Anschmiegfläche und die unebene Anbaufläche derart relativ zueinander positioniert werden können, dass zwischen den Flächen ein im Wesentlichen konstanter Abstand von 25 µm bis 200 µm, vorzugsweise von 50 µm bis 100 µm, liegt. Dieser im Wesentlichen konstante Abstand gilt für die gesamte Anbaufläche der Trägerkomponente, d. h. über die gesamte unebene Anbaufläche der Trägerkomponente hinweg wird dieser Abstand eingehalten. Auf diese Weise lässt sich mittels der Anschmiegfläche Ausgangsmaterial an die Anbaufläche andrücken oder anschmiegen. Dabei wird der Abstand von 25 µm bis 200 µm, vorzugsweise von 50 µm bis100 µm, bevorzugt derart gewählt, dass er einer Schichtdicke der schichtweise herzustellenden Bauteilkomponente, insbesondere der herzustellenden Dentalrestauration, entspricht. Somit kann Ausgangsmaterial, das zwischen der Anschmiegfläche und der unebenen Anbaufläche vorhanden ist, mittels der Belichtungseinheit ausgehärtet werden, sodass eine weitere Schicht auf der unebenen Anbaufläche oder einer bereits auf der unebenen Anbaufläche hergestellten Schicht der Bauteilkomponente entsteht. Es versteht sich in diesem Zusammenhang, dass hierzu das Ausgangsmaterial fließfähig sein muss, d. h. zumindest, wenn es im Behältnis der erfindungsgemäßen Vorrichtung aufgenommen ist, ist das Ausgangsmaterial fließfähig. Mittels einer solchen Vorrichtung lässt sich also besonders effizient ein Mehrkomponentenbauteil, insbesondere eine Mehrkomponenten-Dentalrestauration, herstellen. Das liegt daran, dass zunächst die Trägerkomponente hergestellt wird. Sofern die Trägerkomponente aus einem einzigen Ausgangsmaterial hergestellt wird, können Reinigungsschritte zwischen der Herstellung einzelner Schichten der Trägerkomponente entfallen. Das betrifft zum Beispiel Trägerkomponenten, die additiv oder generativ, d. h. schichtweise, hergestellt sind. Alternativ kann die Trägerkomponente auch spanend hergestellt sein, zum Beispiel mittels Fräsen. Wie bereits erwähnt, weist die Trägerkomponente eine unebene Anbaufläche auf. Die erfindungsgemäße Anschmiegfläche macht es dabei möglich, eine weitere Bauteilkomponente des Mehrkomponentenbauteils an die unebene Anbaufläche anzubauen. Nachdem also die Bauteilkomponenten des Mehrkomponentenbauteils nacheinander hergestellt werden und nicht das Mehrkomponentenbauteil insgesamt mittels sich durch zwei oder mehr Bauteilkomponenten erstreckenden Schichten hergestellt wird, kann die Anzahl an Reinigungsschritten gegenüber einem Verfahren oder einer Vorrichtung, bei der eine einzelne Schicht aus zwei oder mehr Ausgangsmaterialien hergestellt wird, stark reduziert werden. Dadurch steigt die Effizienz bei der Herstellung des Mehrkomponentenbauteils deutlich an.

Im Zusammenhang mit der vorliegenden Erfindung kann die Tatsache, dass die Bauplattform und das Behältnis relativ zueinander beweglich gelagert sind, gemäß mehrerer Alternativen realisiert sein. Gemäß einer ersten Alternative ist das Behältnis stationär, d. h. unbeweglich. Die Bauplattform hingegen ist beweglich gelagert, sodass sie sich relativ zum Behältnis bewegen kann. Beispielsweise lässt sich hierzu die Bauplattform translatorisch und/oder rotatorisch bewegen. Gemäß einer zweiten Alternative ist die Bauplattform stationär, d. h. unbeweglich. Das Behältnis hingegen ist beweglich gelagert, sodass es sich relativ zur Bauplattform bewegen kann. Beispielsweise lässt sich hierzu das Behältnis translatorisch und/oder rotatorisch bewegen. Auch eine Kombination der ersten Alternative und der zweiten Alternative ist denkbar. In allen Alternativen ist dabei die Bauplattform entweder in einem Inneren des Behältnisses vorhanden oder kann in ein Inneres des Behältnisses hinein bewegt werden. Dabei sind insbesondere das Behältnis und die Bauplattform entlang eine Richtung relativ zueinander beweglich, die parallel zu einer Baurichtung verläuft, entlang derer die Bauteilkomponente aufgebaut wird.

Je nach relativer Beweglichkeit der Bauplattform relativ zum Behältnis kann die Anschmiegfläche in Richtung zu einem Boden des Behältnisses hin orientiert sein oder in eine Richtung vom Boden des Behältnisses weg orientiert sein. Optional kann auch die Anschmiegfläche relativ zum Behältnis beweglich, zum Beispiel verfahrbar, sein.

Optional erlaubt die relative Beweglichkeit der Bauplattform und des Behältnisses ein Kippen oder Neigen der Bauplattform relativ zum Behältnis. Dies kann dadurch erfolgen, dass die Bauplattform gekippt wird und das Behältnis stationär gehalten wird. Alternativ wird das Behältnis gekippt und die Bauplattform stationär gehalten. Ebenfalls ist eine Kombination dieser beiden Alternativen möglich. In allen Alternativen bewirkt das Kippen oder Neigen beim Trennen einer hergestellten Schicht der Bauteilkomponente vom Boden des Behältnisses, dass dieses Trennen nicht ausschließlich senkrecht, d.h. orthogonal zu einer Erstreckung des Bodens, durchgeführt wird. Stattdessen entsteht eine Art Abroll- und/oder Schälbewegung. Das erleichtert das Trennen, da maximal auftretende Adhäsions- und Saugkräfte erheblich reduziert werden. Des Weiteren hat das Kippen oder Neigen des Behältnisses den Vorteil, dass das Nachströmen von Ausgangsmaterial erleichtert wird. Dieselben Effekte können alternativ oder zusätzlich erreicht werden, indem die Bauplattform und das Behältnis gleichzeitig in Horizontalrichtung und Vertikalrichtung zueinander verfahren werden.

Zum Erleichtern eines Trennprozesses einer hergestellten Bauteilschicht vom Boden des Behältnisses kann auch eine Drucksensorik verwendet werden. In diesem Zusammenhang ermöglicht eine Drucksensorik, die während des Trennens einer hergestellten Schicht der Bauteilkomponente vom Boden des Behältnisses verwendet wird, dass während des Trennens auftretende Kräfte detektiert werden können, z. B. eine Trennkraft. Zudem können Kräfte überwacht werden, während die Bauplattform für das Herstellen einer nächsten Schicht der Bauteilkomponente wieder in Position gebracht wird. Auf diese Weise kann eine stabile Schicht an Ausgangsmaterial für das Herstellen der nächsten Schicht der Bauteilkomponente gewährleistet werden. Ebenfalls ermöglicht die Drucksensorik, einen Fließdruck oder Fließkräfte von nachströmendem Ausgangsmaterial zu detektieren. Basierend hierauf kann ein besonders gut geeigneter Zeitpunkt für das Aushärten der nächsten Schicht der Bauteilkomponente bestimmt werden. Ferner kann mittels einer Drucksensorik sichergestellt werden, dass auf die herzustellende Bauteilkomponente wirkende Kräfte unterhalb eines vorgegebenen Schwellwertes sind, sodass eine unerwünschte Beschädigung der Bauteilkomponente durch zu hohe Kräfte ausgeschlossen werden kann. In diesem Zusammenhang lässt sich auch eine Bewegungsgeschwindigkeit, die die Bauplattform und das Behältnis beim Herstellen der Bauteilkomponente relativ zueinander haben können, basierend auf Detektionsergebnissen der Drucksensorik steuern oder regeln. Somit kann die Vorrichtung in effizienter Weise betrieben werden, ohne eine unerwünschte Beschädigung der Bauteilkomponente zu riskieren. Optional kann ferner ein virtuelles Modell vorgesehen sein, anhand dem unter Nutzung von Detektionsergebnissen der Drucksensorik Kräfte und weitere Prozessparameter vorhergesagt werden können. Die Drucksensorik kann beispielsweise als sogenanntes Drei-Punkt-Messsystem ausgeführt sein. Insgesamt kann mittels einer Drucksensorik eine Herstellung einer Bauteilkomponente besser kontrolliert werden. Dadurch lässt sich einerseits eine hohe Qualität der hergestellten Bauteilkomponente sicherstellen. Gleichzeitig kann die Bauteilkomponente mit hoher Effizienz, insbesondere mittels vergleichsweiser kleiner Zykluszeiten je Schicht, hergestellt werden. Dies kann in einer vergleichsweise kurzen Bauzeit resultieren.

Ferner können in der erfindungsgemäßen Vorrichtung die Bauplattform und die Belichtungseinheit zumindest gemäß zweier Alternativen relativ zueinander angeordnet sein. Gemäß einer ersten Alternative ist die Bauplattform oberhalb der Belichtungseinheit angeordnet. Genauer gesagt ist die Belichtungseinheit unterhalb des Behältnisses angeordnet und die Bauplattform innerhalb oder oberhalb des Behältnisses. Bei der schichtweisen Herstellung einer Bauteilkomponente, insbesondere einer Dentalrestaurationskomponente, wird in dieser Variante die Bauplattform sukzessive aus dem Behältnis herausgefahren, d.h. vom Boden des Behältnisses wegbewegt. Eine derartige Herstellung einer Bauteilkomponente kann auch als "bottom up" bezeichnet werden. Gemäß einer zweiten Alternative ist die Belichtungseinheit oberhalb der Bauplattform angeordnet. Dabei ist die Bauplattform innerhalb eines Behältnisses angeordnet und die Belichtungseinheit oberhalb des Behältnisses. Bei der schichtweisen Herstellung einer Bauteilkomponente, insbesondere einer Dentalrestaurationskomponente, wird in dieser Variante die Bauplattform sukzessive tiefer ins Behältnis hineingefahren, d.h. zum Boden des Behältnisses hin bewegt. Eine derartige Herstellung einer Bauteilkomponente kann auch als "top down" bezeichnet werden.

Gemäß einem Beispiel ist die Anschmiegfläche zumindest teilweise, insbesondere vollständig, gegenüber Abschnitten des Bodens, die nicht die Anschmiegfläche bilden, vertieft angeordnet. Auf diese Weise wird der schwerkraftgetriebene Zufluss von Ausgangsmaterial in den Bereich der Anschmiegfläche gefördert, sodass sichergestellt wird, dass stets ausreichend Ausgangsmaterial im Bereich der Anschmiegfläche vorhanden ist.

Die Anschmiegfläche kann im Zusammenhang mit der erfindungsgemäßen Vorrichtung gemäß mehrerer Alternativen hergestellten werden. Beispielsweise lässt sich die Anschmiegfläche spanend herstellen, zum Beispiel indem die Anschmiegfläche in einen Boden des Behältnisses oder in ein innerhalb des Behältnisses angeordnetes Bauteil eingefräst wird. Alternativ ist es möglich, die Anschmiegfläche in einen Boden des Behältnisses oder in ein innerhalb des Behältnisses angeordnetes Bauteil einzulasern. Es werden somit zur Herstellung der Anschmiegfläche gezielt Abschnitte des Bodens oder des innerhalb des Behältnisses angeordneten Bauteils verdampft. Ferner kann die Anschmiegfläche hergestellt werden, indem ein Abschnitt des Bodens des Behältnisses oder ein innerhalb des Behältnisses angeordnetes Bauteil verformt werden. Zu diesem Zweck kann ein Überdruck oder ein Unterdruck verwendet werden, um den Abschnitt des Bodens oder des Bauteils in die gewünschte Form zu bringen. Selbstverständlich können die genannten Verfahren zum Herstellen der Anschmiegfläche auch kombiniert werden.

Gemäß einer Option ist die Anschmiegfläche mit einer Anti-Haftbeschichtung oder einer Anti-Haft-Schicht versehen. Auf diese Weise kann sichergestellt werden, dass eine Bauteilschicht nach dem Belichten nicht in unerwünschter Weise auf der Anschmiegfläche haftet. Das bedeutet, dass die Bauteilschicht nach dem Belichten, wenn überhaupt, lediglich derart an der Anschmiegfläche haftet, dass die Bauteilschicht durch eine Relativbewegung zwischen der Bauplattform und der Anschmiegfläche von der Anschmiegfläche getrennt werden kann, sodass die nächste Bauteilschicht hergestellt werden kann. Eine solche Anti-Haftbeschichtung oder Anti-Haft-Schicht kann aus einem Silikonmaterial, z. B. einem Silikonpolymer, oder Polydimethylsiloxan (PDMS) hergestellt sein. Dabei kann die Anti-Haftbeschichtung oder die Anti-Haft-Schicht als integraler Bestandteil der Anschmiegfläche ausgeführt sein.

Die Vorrichtung zur schichtweisen Herstellung einer Bauteilkomponente kann grundsätzlich dazu ausgebildet sein, die Bauplattform und das Behältnis diskontinuierlich relativ zueinander zu bewegen. Das bedeutet, dass beim Belichten jeder Bauteilschicht im Wesentlichen keine Relativbewegung stattfindet und erst nach dem Belichten einer Bauteilschicht eine Relativbewegung stattfindet, sodass die gerade hergestellte Bauteilschicht von der Anschmiegfläche abgehoben, d.h. abgelöst, wird. Alternativ kann die Vorrichtung zur schichtweisen Herstellung einer Bauteilkomponente auch dazu ausgebildet sein, die Bauplattform und das Behältnis kontinuierlich relativ zueinander zu bewegen. Das bedeutet, dass sich beim Herstellen einer Bauteilkomponente die Bauplattform und das Behältnis kontinuierlich relativ zueinander bewegen. Insbesondere ist diese kontinuierliche Bewegung gleichmäßig oder gleichförmig. Auf diese Weise kann die Bauteilkomponente im Wesentlichen kontinuierlich aufgebaut werden, d. h. ohne spezifische Prozessschritte, die das Abtrennen einer gerade hergestellten Bauteilschicht von der Anschmiegfläche zum Inhalt haben. Dies steigert weiter die Effizienz der Herstellung der Bauteilkomponente. Für derartige Verfahren wird unter anderem der Begriff Continuous Liquid Interface Production (CLIP) verwendet. In einem solchen Fall kann die Anti-Haft-Schicht als sogenannte Schmierschicht ausgeführt sein, die beispielsweise aus einem Silikonmaterial, insbesondere aus einem Silikonpolymer, hergestellt ist. Eine derartige Schicht gibt kontinuierlich einen dünnen Film an Silikonöl an die Oberfläche ab. Alternativ oder zusätzlich kann für die Anti-Haft-Schicht auch ein PTFE-Material verwendet werden. Dabei kann das Ausgangsmaterial auf diesem Film, der die eigentliche Schmierschicht darstellt, durch entsprechende Belichtung polymerisieren, ohne direkten Kontakt zur Anti-Haft-Schicht aus Silikonmaterial aufzubauen. Die ausgehärtete Schicht schwebt sozusagen auf dem Film aus Silikonöl und kann leicht durch Anheben der Bauplattform getrennt werden. Dadurch wird die Trennung der ausgehärteten Schicht nach der Belichtung reibungslos und nahezu kraftfrei. Eine derartige Anti-Haft-Schicht ist bevorzugt transparent und elastisch.

Alternativ zur Ausführung der Anti-Haft-Schicht als Schmierschicht kann die Anti-Haft-Schicht als semipermeable Folie ausgebildet sein. Eine solche Folie ist für Ausgangsmaterial, aus dem die Bauteilkomponente hergestellt werden soll, undurchlässig. Gleichzeitig ist die Folie für Luft, insbesondere für Sauerstoff, permeabel d.h. durchlässig. sein, sodass sichergestellt wird, dass im Bereich der Anti-Haft-Schicht das Ausgangsmaterial stets fließfähig ist. Die Luft, insbesondere der Sauerstoff, die bzw. der die Folie durchdringt, kann dabei auf einer Innenseite des Behältnisses eine sogenannte Inhibitionsschicht bilden, vereinfacht gesagt ein Polster, auf der das Ausgangsmaterial aufliegt und ausgehärtet wird. Auch in der Alternative mit semipermeabler Folie schwebt sozusagen die ausgehärtete Schicht auf dieser Inhibitionsschicht und kann leicht durch Anheben der Bauplattform getrennt werden. Dadurch wird die Trennung der ausgehärteten Schicht nach der Belichtung reibungslos und nahezu kraftfrei. Eine derartige Anti-Haft-Schicht ist bevorzugt transparent und elastisch.

Auch für die Belichtungseinheit der erfindungsgemäßen Vorrichtung kommen mehrere Alternativen in Betracht. Beispielsweise kann die Belichtungseinheit einen Projektor umfassen. Dabei kann der Projektor als sogenannter Digital Light Projector (DLP) ausgeführt sein. Alternativ umfasst die Belichtungseinheit ein Paneel, das zum Beispiel als LCD-Paneel oder als LED-Paneel ausgeführt ist. Alternativ oder zusätzlich kann die Belichtungseinheit einen Laser als Lichtquelle umfassen. In einem Fall, in dem die Belichtungseinheit einen Laser oder einen Projektor umfasst, kann die Belichtungseinheit ferner einen oder mehrere optische Diffusoren umfassen, um gezielt alle Abschnitte der Anschmiegfläche belichten zu können. In einem Fall, in dem die Belichtungseinheit ein Paneel umfasst, können das Paneel und die Anschmiegfläche integral ausgeführt sein, d. h. dass eine Fläche des Paneels die Anschmiegfläche bildet.

Wie bereits erwähnt, kann die herzustellende Bauteilkomponente eine Dentalrestaurationskomponente sein. In diesem Fall ist bevorzugt auch die Trägerkomponente eine Dentalrestaurationskomponente. In diesem Zusammenhang kann beispielsweise die Trägerkomponente eine Prothesenbasis oder eine Teilprothesenbasis sein. Mittels der erfindungsgemäßen Vorrichtung kann dann eine Bauteilkomponente, die einen Ersatzzahn oder eine Ersatzzahngruppierung umfasst, an die Trägerkomponente angebaut werden. Alternativ kann die Trägerkomponente eine Ersatzzahngruppierung sein. Mittels der erfindungsgemäßen Vorrichtung kann dann eine Bauteilkomponente, die eine Prothesenbasis ist oder umfasst, an die Trägerkomponente angebaut werden. Gemäß einer weiteren Alternative kann die Trägerkomponente eine Ersatzzahnrumpfgruppierung sein, wobei unter einer Ersatzzahnrumpfgruppierung eine Gruppierung an Ersatzzahnrümpfen, also nachgebildeten Zähnen ohne die Zahnschneide nachbildende Abschnitte, verstanden wird. Mittels der erfindungsgemäßen Vorrichtung kann dann eine Bauteilkomponente, die eine Zahnschneidengruppierung umfasst, an die Trägerkomponente, d.h. die Ersatzzahnrumpfgruppierung, angebaut werden. Insgesamt lassen sich also mittels der erfindungsgemäßen Vorrichtung Komponenten für Vollprothesen oder Teilprothesen herstellen. Dabei kann die Teilprothese als flexible Teilprothese (Englisch: Flexible Partial Denture) ausgeführt sein. Ebenso lassen sich mittels der erfindungsgemäßen Vorrichtung Kronen und Brücken herstellen.

Es versteht sich dabei, dass auch wenn die Vorrichtung zum Herstellen einer Dentalrestaurationskomponente geeignet ist, diese Eignung nicht auf die Herstellung einer Dentalrestaurationskomponente beschränkt sein muss. In diesem Zusammenhang kann die erfindungsgemäße Vorrichtung zusätzlich oder alternativ dazu ausgebildet sein, eine Bauteilkomponente herzustellen, die eine Schmuckstückkomponente darstellt. Alternativ oder zusätzlich kann die erfindungsgemäße Vorrichtung dazu ausgebildet sein, eine Bauteilkomponente herzustellen, die eine Prothesenkomponente darstellt, zum Beispiel eine Gelenkprothesenkomponente wie eine Hüftprothesenkomponente oder eine Knieprothesenkomponente. Alternativ oder zusätzlich kann die erfindungsgemäße Vorrichtung dazu ausgebildet sein, eine Bauteilkomponente herzustellen, die eine Implantatskomponente darstellt. Ein Beispiel für eine Implantatskomponente ist eine Knochenimplantatskomponente oder ein Dentalimplantatskomponente. Weiter alternativ oder zusätzlich kann die Bauteilkomponente eine Komponente eines Orthesenphantoms für die medizinische Bildgebung sein. Insgesamt lassen sich also mittels der erfindungsgemäßen Vorrichtung aus der Trägerkomponente und der herzustellenden Bauteilkomponente Mehrkomponentenbauteile herstellen, deren Komponenten sich beispielsweise hinsichtlich des verwendeten Materials und/oder in der Farbe der Komponenten unterscheiden.

Mittels der erfindungsgemäßen Vorrichtung lässt sich beispielsweise ein Stereolithografie Verfahren ausführen. Dementsprechend kann die Vorrichtung als Stereolithografie-Vorrichtung oder Stereolithografie-Anlage bezeichnet werden.

Bevorzugt ist die Anschmiegfläche lichtdurchlässig. Das ermöglicht es, das Ausgangsmaterial durch die Anschmiegfläche hindurch zu belichten und dadurch auszuhärten. Es ergibt sich ein kompakter Aufbau der Vorrichtung zur schichtweisen Herstellung einer Bauteilkomponente.

In einem Beispiel ist die Belichtungseinheit außerhalb des Behältnisses angeordnet. Dabei ist die Belichtungseinheit lichtleitend mit der Anschmiegfläche gekoppelt. Beispielsweise können sich in diesem Zusammenhang die Belichtungseinheit und die Anschmiegfläche gegenüberliegen. In einem Fall, in dem die Anschmiegfläche an einem Boden des Behältnisses vorgesehen ist, kann die Belichtungseinheit also beispielsweise unterhalb des Bodens des Behältnisses positioniert sein. Dasselbe gilt, falls die Anschmiegfläche an einem Bauteil, z. B. Vorsprung, innerhalb des Behältnisses vorgesehen ist. In einer derartigen Konfiguration erfolgt das Aushärten einer Bauteilschicht, d. h. das Anbauen einer Bauteilschicht an die Trägerkomponente oder an eine bereits auf der Trägerkomponente angebaute Bauteilschicht somit mittels einer Belichtung durch die Anschmiegfläche hindurch. Auf diese Weise lässt sich einerseits eine effiziente und zuverlässige Belichtung sicherstellen. Andererseits kann so die Vorrichtung kompakt aufgebaut werden. Alternativ kann die Anschmiegfläche als integraler Bestandteil der Belichtungseinheit ausgebildet sein. Somit ist die Anschmiegfläche als Fläche auf einer Komponente der Belichtungseinheit, zum Beispiel als Fläche eines Paneels der Belichtungseinheit, ausgeführt. Auf diese Weise lässt sich die Kompaktheit der Vorrichtung weiter steigern.

Gemäß einer Ausführungsform ist die Anschmiegfläche als Grenzfläche eines vom Boden vorstehenden Vorsprungs ausgeführt. Alternativ ist die Anschmiegfläche zumindest abschnittsweise in den Boden eingearbeitet. Die Anschmiegfläche kann somit direkt im Boden oder mit einem anhand einer Dimensionierung des Vorsprungs wählbaren Abstand vom Boden angeordnet sein. Dabei kann die Anschmiegfläche auch gegenüber einer Ebene, in der sich der Boden erstreckt, gekippt, geneigt oder gedreht sein. Insgesamt lässt sich die Anschmiegfläche also vergleichsweise frei im Inneren des Behältnisses oder an einem Rand des Inneren des Behältnisses positionieren, sodass die Anschmiegfläche anwendungsspezifisch angeordnet werden kann.

Der Boden des Behältnisses kann eine formflexible Folie umfassen, die die unebene Anschmiegfläche bedeckt. Genauer gesagt liegt die formflexible Folie an der unebenen Anschmiegfläche an. Es folgt also die formflexible Folie genau der Geometrie der Anschmiegfläche. Somit liegt die formflexible Folie stets zwischen dem im Behältnis aufgenommenen Ausgangsmaterial und der Anschmiegfläche. In diesem Fall wird das Ausgangsmaterial mittels der Anschmiegfläche und unter zusätzlicher Nutzung der formflexiblen Folie an die Trägerkomponente angeschmiegt. Beispielsweise dichtet in diesem Zusammenhang die formflexible Folie das Behältnis nach unten hin ab. In diesem Fall kann die Anschmiegfläche als Bestandteil oder Merkmal einer Stützplatte ausgeführt sein. Das bedeutet, dass die Stützplatte mit der Anschmiegfläche dazu dient, das Behältnis und das darin aufgenommene Ausgangsmaterial mechanisch zu stabilisieren, wohingegen die Dichtigkeit für Ausgangsmaterial durch die formflexible Folie gewährleistet wird. Die Stützplatte kann beispielsweise aus einem Glasmaterial hergestellt sein.

In einem Fall, in dem der Boden des Behältnisses die formflexible Folie umfasst, kann die bereits erläuterte Anti-Haft-Beschichtung oder Anti-Haft-Schicht durch die Folie gebildet oder als Bestandteil der Folie ausgeführt sein. Es ergeben sich die oben bereits erläuterten Effekte und Vorteile. In einem Fall, in dem die Anti-Haft-Schicht als Folie ausgeführt ist, kann diese aus einem Teflon-Material hergestellt sein.

Ein Boden mit einer formflexiblen Folie ist auch beim Trennen einer gerade hergestellten Schicht einer Bauteilkomponente vorteilhaft. Im Zuge eines solchen Trennvorgangs kann dabei die Folie verformt werden und sich von der Anschmiegfläche abheben. Dadurch entstehen Schälkräfte, die das Ablösen der Schicht der Bauteilkomponente erleichtern. Mittels Relaxation, d.h. elastischem Rückverformen, legt sich die Folie nach vollendeter Trennung wieder direkt an die Anschmiegfläche an. Aufgrund der Bedeutung für das Trennen kann in diesem Zusammenhang die formflexible Folie auch als Trennfolie bezeichnet werden.

Insbesondere lässt sich die bereits beschriebene Variante, in der die Vorrichtung zur schichtweisen Herstellung einer Bauteilkomponente dazu ausgebildet sein, die Bauplattform und das Behältnis kontinuierlich relativ zueinander zu bewegen, d.h. ein sogenanntes Continuous Liquid Interface Production (CLIP) Verfahren auszuführen, mit der Ausführungsform kombinieren, in der der Boden des Behältnisses eine formflexible Folie umfasst. In einem solchen Fall ist die Anti-Haft-Schicht, die von der Folie gebildet wird oder als Bestandteil der Folie ausgeführt ist, als sogenannte Schmierschicht ausgeführt, die beispielsweise aus einem Silikonmaterial hergestellt ist. Eine derartige Schicht gibt kontinuierlich einen dünnen Film an Silikonöl an die Oberfläche ab. Dabei kann das Ausgangsmaterial auf diesem Film, der die eigentliche Schmierschicht darstellt, durch entsprechende Belichtung polymerisieren, ohne direkten Kontakt zur Anti-Haft-Schicht aus Silikonmaterial aufzubauen. Die ausgehärtete Schicht schwebt sozusagen auf dem Film aus Silikonöl und kann leicht durch Anheben der Bauplattform getrennt werden. Dadurch wird die Trennung der ausgehärteten Schicht nach der Belichtung reibungslos und nahezu kraftfrei. Eine derartige Anti-Haft-Schicht ist bevorzugt transparent und elastisch. Auch kann die formflexible Folie mehrschichtig ausgebildet sein und dabei eine Anti-Haft-Schicht aus semipermeabler Folie umfassen, welche als Alternative zur Schmierschicht dient. Wie bereits erläutert, ist eine solche Folie für Ausgangsmaterial, aus dem die Bauteilkomponente hergestellt werden soll, undurchlässig. Gleichzeitig ist die Folie für Luft, insbesondere für Sauerstoff, permeabel d.h. durchlässig. Die Luft, insbesondere der Sauerstoff, die bzw. der die Folie durchdringt, kann dabei auf einer Innenseite des Behältnisses eine sogenannte Inhibitionsschicht bilden, vereinfacht gesagt ein Polster, auf der das Ausgangsmaterial aufliegt und ausgehärtet wird. Auch in der Alternative mit semipermeabler Folie schwebt sozusagen die ausgehärtete Schicht auf dieser Inhibitionsschicht und kann leicht durch Anheben der Bauplattform getrennt werden. Neben der semipermeablen Folie kann in diesem Zusammenhang die formflexible Folie eine weitere Schicht umfassen, die impermeabel ausgeführt ist. In einer solchen Konfiguration kann die Luft, insbesondere der Sauerstoff zwischen die beiden Schichten der formflexiblen Folie, d.h. zwischen die semipermeable Schicht und die impermeable Schicht eingebracht werden. Dadurch wird die Trennung der ausgehärteten Schicht nach der Belichtung reibungslos und nahezu kraftfrei. Eine derartige Anti-Haft-Schicht ist bevorzugt transparent und elastisch.

Gemäß einem Beispiel umfasst die Vorrichtung ferner eine Druckeinheit, die zum Anlegen der Folie an die Anschmiegfläche mittels Unterdrucks oder mittels Überdrucks ausgebildet ist. Eine derartige Druckeinheit umfasst beispielsweise einen Strömungskanal, der es erlaubt, die Folie mittels Unterdrucks oder Überdrucks an die Anschmiegfläche anzulegen. Ein derartiger Strömungskanal ist mit einer Unterdruckerzeugungseinheit oder Überdruckerzeugungseinheit koppelbar. Optional kann die Unterdruckerzeugungseinheit oder die Überdruckerzeugungseinheit auch ein Bestandteil der Druckeinheit sein. Mittels einer Druckeinheit lässt sich also die Folie zuverlässig und präzise an die Anschmiegfläche anlegen, sodass sich Bauteilkomponenten mit besonders hoher Präzision herstellen lassen. Ein weiterer Vorteil, der aus dem Anlegen der Folie an die Anschmiegfläche mittels Unterdrucks oder Überdrucks resultiert, liegt in der Tatsache, dass sich durch Einstellen eines entsprechenden Unterdrucks oder Überdrucks justieren lässt, mit welcher Kraft die Folie an die Anschmiegfläche angelegt wird. Auf diese Weise kann zum Beispiel ein gewisses Abheben der Folie von der Anschmiegfläche während eines Trennens einer gerade hergestellten Schicht der Bauteilkomponente von der Folie erlaubt werden. Dies erhöht die Zuverlässigkeit des Trennvorgangs. Aufgrund des Unterdrucks oder Überdrucks wird die Folie danach wieder in eine präzise Anlage an die Anschmiegfläche überführt.

Gemäß einer Variante weist zumindest ein Abschnitt der Anschmiegfläche eine Strukturierung auf. Bevorzugt weist die gesamte Anschmiegfläche eine Strukturierung auf. Dabei kann die Strukturierung eine Mikro- oder Nanostrukturierung sein. Mittels einer derartigen Strukturierung wird das Trennen einer Bauteilschicht von der Anschmiegfläche erleichtert. In einem Fall, in dem eine formflexible Folie vorgesehen ist, die die Anschmiegfläche bedeckt, erleichtert die Strukturierung ein Abheben der formflexiblen Folie von der Anschmiegfläche.

In einem Fall, in dem der Boden des Behältnisses eine formflexible Folie umfasst und die Anschmiegfläche als Bestandteil oder Merkmal einer Stützplatte ausgeführt ist, kann die Stützplatte optional mittels einer zugeordneten Antriebseinheit neigbar oder kippbar sein. Wie bereits erläutert, kann das Kippen oder Neigen beim Trennen einer hergestellten Schicht der Bauteilkomponente vom Boden des Behältnisses bewirken, dass dieses Trennen nicht ausschließlich senkrecht, d.h. orthogonal zu einer Erstreckung des Bodens, durchgeführt wird.

Stattdessen entsteht eine Art Abroll- und/oder Schälbewegung. Das erleichtert das Trennen, da maximal auftretende Adhäsions- und Saugkräfte erheblich reduziert werden. Des Weiteren hat das Kippen oder Neigen der Stützplatte den Vorteil, dass das Nachströmen von Ausgangsmaterial erleichtert wird. Insbesondere ist die Stützplatte relativ zur formflexiblen Folie neigbar oder kippbar. In einem solchen Fall erleichtert das Neigen oder Kippen der Stützplatte ein Abheben der formflexiblen Folie von der Anschmiegfläche, an der sie ansonsten angesichts eines möglicherweise herrschenden Überdrucks oder Unterdrucks oder infolge von Oberflächenenergien haftet. Das unterstützt auch ein Trennen einer hergestellten Schicht der Bauteilkomponente von der formflexiblen Folie.

Gemäß einer Variante kann die Anschmiegfläche in einer Draufsicht insgesamt bogenförmig sein. Alternativ umfasst die Anschmiegfläche in der Draufsicht ein bogenförmiges Flächensegment. Dabei ist die insgesamt bogenförmige Anschmiegfläche oder das bogenförmige Flächensegment zum Anschmiegen von Ausgangsmaterial an eine ganz oder teilweise einem menschlichen Kieferbogen folgende Trägerkomponente dimensioniert. Vereinfacht gesagt kann die Anschmiegfläche also hinsichtlich ihrer in einer Draufsicht sichtbaren Form daran angepasst sein, eine Bauteilkomponente an eine Trägerkomponente anzubauen, die ganz oder teilweise einem menschlichen Kieferbogen folgt. Anstelle von bogenförmig oder zusätzlich zu bogenförmig kann dabei ein menschlicher Kieferbogen auch als U-förmig, hufeisenförmig, oder parabelförmig bezeichnet werden. Auf diese Weise lassen sich besonders einfach und effizient Dentalrestaurationskomponenten für dentale Vollprothesen oder dentale Teilprothesen herstellen. In diesem Zusammenhang ist ein menschlicher Kieferbogen beispielsweise 3 cm bis 8 cm breit, wobei die Breite zwischen den jeweils hintersten Backenzähnen oder Molaren gemessen wird. Dabei beträgt die Breite des Kieferbogens für einen vergleichsweise kleinen Kieferbogen also ca. 3 cm, wohingegen eine Breite des Kieferbogens für eine vergleichsweise großen Kieferbogen ca. 8 cm beträgt. Ein mittelgroßer Kieferbogen hat dementsprechend eine Breite von ca. 5 cm.

Die Anschmiegfläche kann eine Wellenform aufweisen, welche mehrere Wellenberge und mehrere Wellentäler umfasst. Die Wellenberge und die Wellentäler sind alternierend angeordnet. In diesem Zusammenhang kann die Anbaufläche der Trägerkomponente eine korrespondierende Wellenform aufweisen, d. h. auch die Anbaufläche kann mehrere Wellenberge und mehrere Wellentäler umfassen, die alternierend angeordnet sind, wobei Wellenberge der Anbaufläche jeweils in Wellentälern der Anschmiegfläche aufgenommen werden können und umgekehrt. Diese Konfiguration erlaubt es, eine Bauteilkomponente zumindest abschnittsweise innerhalb eines oder mehrerer der Wellentäler der Trägerkomponente anzubauen, ohne zwischendurch einen Reinigungsschritt durchführen zu müssen. In einem Fall, in dem die herzustellende Bauteilkomponente eine Dentalrestaurationskomponente ist, lassen sich auf diese Weise originalgetreue Mehrkomponenten-Dentalrestaurationen herstellen, die die herzustellende Bauteilkomponente und die Trägerkomponente umfassen. Das kommt daher, dass bei einem menschlichen Gebiss eine Grenze zwischen Zahnfleisch und Zähnen ebenfalls wellenförmig ist. Dies lässt sich nachbilden, wenn zum Beispiel die Trägerkomponente Zahnfleisch nachbildet, also als Prothesenbasis ausgeführt ist, und die herzustellende Bauteilkomponente einen oder mehrere Ersatzzähne nachbildet. Auch der umgekehrte Fall ist möglich. Dann bildet die Trägerkomponente einen oder mehrere Ersatzzähne nach und die herzustellende Bauteilkomponente bildet Zahnfleisch nach, ist also als Prothesenbasis ausgeführt. Beides Mal wird eine hohe Originaltreue sichergestellt.

Gemäß einer Variante können zumindest manche der Wellenberge und/oder manche der Wellentäler entlang von Richtungen verlaufen, die zusammengenommen ein Strahlenmuster ergeben. Diese Richtungen sind also strahlenförmig angeordnet. Optional kann dabei die strahlenförmige Anordnung dieser Richtungen derart erfolgen, dass alle Richtungen von einem gemeinsamen Mittelpunkt oder einer gemeinsamen Mittellinie ausgehen. Auf diese Weise kann eine Originaltreue weiter gesteigert werden, wenn die herzustellende Bauteilkomponente eine Dentalrestaurationskomponente ist. Das gilt insbesondere dann, wenn die Dentalrestaurationskomponente einen Teil eines Frontzahnbereichs oder den gesamten Frontzahnbereich eines menschlichen Gebisses nachbilden soll. Wie bereits erwähnt, ist auch im Frontzahnbereich ein Übergang zwischen Zahnfleisch und Zähnen wellenförmig. Dabei verlaufen die Wellenberge und Wellentäler entlang von Richtungen, die strahlenförmige von einem gemeinsamen Mittelpunkt ausgehen. Ein Abstand zwischen jeweils benachbarte Richtungen vergrößert sich also, je weiter man sich vom gemeinsamen Mittelpunkt entfernt. Es wird darauf hingewiesen, dass auch im Bereich der Backenzähne, d. h. im Bereich der Molaren und Prämolaren ein Übergang zwischen Zahnfleisch und Zähnen wellenförmig ist. Dabei verlaufen die Wellenberge und Wellentäler entlang von Richtungen, die ebenfalls strahlenförmig angeordnet sind, jedoch abschnittsweise auch parallel verlaufen können.

Die Wellenform kann zumindest abschnittsweise im Wesentlichen als Sinuswelle oder als Kettenlinie oder als Polygonprofil oder als Mischform von wenigstens zwei aus Sinuswelle, Kettenlinie und Polygonprofil ausgebildet sein. In diesem Zusammenhang kann das Polygonprofil zum Beispiel als Rechteckprofil oder Dreieckprofil ausgebildet sein. Ferner wird unter einer Kettenlinie eine Kurve verstanden, die entsprechend eines Durchhangs einer an ihren Enden aufgehängten Kette unter dem Einfluss der Schwerkraft verläuft. Dabei kann es sich um eine Cosinus Hyperbolicus Kurve handeln. Eine Kettenlinie wird dabei oft auch als Seilkurve, Katenoide oder Kettenkurve bezeichnet. Die Wellenform umfasst bevorzugt mehrere Kettenlinien, die aneinander angrenzen. Die Tatsache, dass die Wellenform lediglich im Wesentlichen als Sinuswelle oder als Kettenlinie oder als Polygonprofil oder als Mischform ausgebildet ist, schließt dabei auch Wellenformen ein, die ausgehend von einer idealen Sinuslinien oder einer idealen Kettenlinie abgeflachte oder abgerundet sind. Auf diese Weise lässt sich in einem Fall, in dem die Bauteilkomponente eine Dentalrestaurationskomponente ist, auch eine Mamelon-Geometrie mit hoher Originaltreue nachbilden. Dabei handelt es sich bei einer Mamelon-Geometrie um eine Wellenform im Bereich einer Zahnschneide, die aus mehreren, im Wesentlichen halbrunden Vorsprüngen zusammengesetzt ist. Alternativ kann die Mamelon-Geometrie ausgehend von einer geraden Zahnschneide dadurch beschrieben werden, dass die Zahnschneide mehrere Einziehungen oder Kerben aufweist. Typisch sind dabei zwei Kerben oder Einziehungen und dementsprechend drei Vorsprünge je Zahn. Die Mamelon-Geometrie ist häufig bei Schneidezähnen zu finden.

In einem Beispiel umfasst die Wellenform Wellenberge und Wellentäler mit unterschiedlichen Höhen und/oder mit unterschiedlichen Breiten. Anders gesagt können die Wellenberge und Wellentäler unterschiedliche Amplituden und Perioden aufweisen. In einem Fall, in dem die Bauteilkomponente eine Dentalrestaurationskomponente ist, lassen sich somit originalgetreue Dentalrestaurationskomponenten herstellen, da bei einem menschlichen Gebiss die Taschen, in denen die Zähne angeordnet sind, ebenfalls hinsichtlich ihrer Höhe und Breite unterschiedlich sind. Üblicherweise beträgt dabei die Höhe 0,5 cm bis 1,5 cm und die Breite 0,5 cm bis 1,2 cm.

Dabei kann eine Höhe und/oder eine Breite eines oder mehrerer Wellenberge mit zunehmendem Abstand von einem Mittelpunkt oder von einer Mittellinie zunehmen. Anders gesagt kann die Höhe und/oder Breite zu einem einer Zunge oder einem Gaumen entsprechenden Bereich hin abnehmen. Auch auf diese Weise lässt sich eine Originaltreue weiter steigern, wenn es sich bei der Bauteilkomponente um eine Dentalrestaurationskomponente handelt.

Eine Breite der Wellenberge und/oder eine Breite der Wellentäler kann entlang der bogenförmigen Anschmiegfläche oder des bogenförmigen Flächensegments variieren. Diese Konfiguration trägt der Tatsache Rechnung, dass bei einem menschlichen Gebiss die Zahnfleischtaschen, in denen die Zähne angeordnet sind entlang eines Kieferbogens unterschiedlich breit sind. Wird dies bei einer mittels der Vorrichtung hergestellten Dentalrestaurationskomponente nachgebildet, ergibt sich eine Dentalrestaurationskomponente mit hoher Originaltreue.

Mittels der Vorrichtung lässt sich somit in einem Fall, in dem die Dentalrestaurationskomponente einen Abschnitt eines Oberkiefers oder einen gesamten Oberkiefer nachbildet, insbesondere folgendes Muster umsetzen: Im Bereich der Molaren sind die Wellenberge oder Wellentäler vergleichsweise groß. Im Bereich der Prämolaren sind die Wellenberge oder Wellentäler im Vergleich dazu etwas kleiner. Im Bereich der Eckzähne sind die Wellenberge oder Wellentäler größer als bei den Prämolaren und kleiner als bei den Molaren. Im Bereich der seitlichen Schneidezähne sind die Wellenberge oder Wellentäler etwas kleiner als bei den Eckzähnen, jedoch weiterhin nicht so groß wie bei den Molaren. Im Bereich der mittleren Schneidezähne sind die Wellenberge oder Wellentäler relativ groß. Beispielsweise können in diesem Bereich die Wellenberge oder Wellentäler ähnlich groß sein wie bei den Molaren oder Eckzähnen. In einem Fall, in dem die Dentalrestaurationskomponente einen Abschnitt eines Unterkiefers oder einen gesamten Unterkiefer nachbildet, lässt sich insbesondere ein Muster umsetzen, das im Bereich der Molaren, der Prämolaren und der Eckzähne demjenigen Muster entspricht, dass bereits hinsichtlich des Oberkiefers erläutert wurde. Im Unterschied dazu sind jedoch im Bereich aller Schneidezähne die Wellenberge und Wellentäler im Wesentlichen gleich groß und etwas kleiner als im Bereich der Eckzähne. Es wird bemerkt, dass bei Dentalprothesen üblicherweise die sogenannten Weisheitszähne nicht nachgebildet werden.

Gemäß einer Ausführungsform ist innerhalb des Behältnisses oder an einem Boden des Behältnisses eine zusätzliche unebene Anschmiegfläche vorhanden. Die zusätzliche unebene Anschmiegfläche ist dazu ausgebildet, Ausgangsmaterial an eine zusätzliche unebene Anbaufläche einer Trägerkomponente anzuschmiegen, sodass die Bauteilkomponente an der unebenen Anbaufläche der Trägerkomponente anbaubar ist. Dabei wird unter dem Anschmiegen von Ausgangsmaterial an die unebene Anbaufläche verstanden, dass die Anschmiegfläche und die unebene Anbaufläche einander angenähert oder aufeinander aufgesetzt werden können und dabei die Anschmiegfläche und die unebene Anbaufläche einander folgen. Mit anderen Worten verlaufen die Anschmiegfläche und unebene Anbaufläche im Wesentlichen parallel. Bevorzugt sind dabei die Anschmiegfläche und die unebene Anbaufläche derart aufeinander abgestimmt, dass die Anschmiegfläche und die unebene Anbaufläche derart relativ zueinander positioniert werden können, dass zwischen den Flächen ein im Wesentlichen konstanter Abstand von 25 µm bis 200 µm, vorzugsweise von 50 µm bis 100 µm, liegt. Dieser im Wesentlichen konstante Abstand gilt für die gesamte Anbaufläche der Trägerkomponente, d. h. über die gesamte unebene Anbaufläche der Trägerkomponente hinweg wird dieser Abstand eingehalten. Auf diese Weise lässt sich mittels der Anschmiegfläche Ausgangsmaterial an die Anbaufläche andrücken oder anschmiegen. Dabei wird der Abstand von 25 µm bis 200 µm, vorzugsweise von 50 µm bis100 µm, bevorzugt derart gewählt, dass er einer Schichtdicke der schichtweise herzustellenden Bauteilkomponente, insbesondere der herzustellenden Dentalrestauration, entspricht. Somit kann Ausgangsmaterial zwischen die zusätzliche Anschmiegfläche und die zusätzliche unebene Anbaufläche fließen und dort mittels der Belichtungseinheit ausgehärtet werden, sodass eine Schicht auf der zusätzlichen unebenen Anbaufläche oder einer bereits auf der unebenen Anbaufläche hergestellten Schicht der Bauteilkomponente entsteht. In diesem Zusammenhang kann die zusätzliche Anschmiegfläche entweder der bereits erläuterten Anschmiegfläche gleichen oder gegenüber der bereits erläuterten Anschmiegfläche unterschiedlich geformt sein. In einem Fall, in dem sich die beiden Anschmiegflächen gleichen, lassen sich also mit der Vorrichtung parallel zwei Bauteilkomponenten herstellen. Für den Fall, dass sich die beiden Anschmiegflächen unterscheiden, kann jede der zwei Anschmiegflächen an eine andere Trägerkomponente angepasst sein. Somit können mittels einer solchen Vorrichtung besonders effizient zwei verschiedenartige Mehrkomponentenbauteile, insbesondere Mehrkomponenten-Dentalrestaurationen, hergestellt werden, die jeweils unterschiedliche Trägerkomponenten nutzen. Im Falle einer Mehrkomponenten-Dentalrestauration kann beispielsweise eine der Anschmiegflächen für die Herstellung einer Dentalrestauration für den Oberkiefer ausgebildet sein und eine der Anschmiegflächen für die Herstellung einer Dentalrestauration für den Unterkiefer.

Gemäß einem Beispiel ist die zusätzliche Anschmiegfläche zumindest teilweise, insbesondere vollständig, gegenüber Abschnitten des Bodens, die nicht die zusätzliche Anschmiegfläche bilden, vertieft angeordnet. Auf diese Weise wird der schwerkraftgetriebene Zufluss von Ausgangsmaterial in den Bereich der zusätzlichen Anschmiegfläche gefördert, sodass sichergestellt wird, dass stets ausreichend Ausgangsmaterial im Bereich der zusätzlichen Anschmiegfläche vorhanden ist.

Die zusätzliche Anschmiegfläche kann im Zusammenhang mit der erfindungsgemäßen Vorrichtung gemäß derselben Alternativen hergestellten werden wie die bereits erläuterte Anschmiegfläche.

Gemäß einer Option ist die zusätzliche Anschmiegfläche mit einer Anti-Haftbeschichtung oder einer Anti-Haft-Schicht versehen. Dabei gilt für die Anti-Haftbeschichtung oder die Anti-Haft-Schicht der zusätzlichen Anschmiegfläche dasselbe, was bereits oben zur Anti-Haftbeschichtung und zur Anti-Haft-Schicht erläutert wurde. Das bedeutet, dass die Anti-Haftbeschichtung oder die Anti-Haft-Schicht von einer formflexiblen Folie gebildet sein kann, die an der zusätzlichen Anschmiegfläche anliegt oder als integraler Bestandteil der zusätzlichen Anschmiegfläche ausgeführt sein kann.

Optional kann im Behältnis zusätzlich eine ebene Fläche vorgesehen sein, über die sich schichtweise eine Bauteilkomponente auf der Bauplattform aufbauen lässt. Dabei kann die ebene Fläche dazu ausgebildet sein, mit der bereits erwähnten Belichtungseinheit zusammenzuwirken, d.h. es kann mittels der bereits erwähnten Belichtungseinheit die Bauteilkomponente schichtweise an die Bauplattform angebaut werden. Alternativ kann der ebenen Fläche eine separate Belichtungseinheit zugeordnet sein. Durch Vorsehen einer derartigen ebenen Fläche wird ein Variantenspektrum an Bauteilkomponenten, die mittels der Vorrichtung schichtweise hergestellt werden können, weiter erhöht. Insbesondere können mittels der ebenen Fläche Bauteilkomponenten hergestellt werden, für deren Herstellung die Anschmiegfläche nicht nötig oder nicht vorteilhaft ist.

Ferner wird die Aufgabe durch ein Behältnis für eine erfindungsgemäße Vorrichtung zur schichtweisen Herstellung einer Bauteilkomponente, insbesondere einer Dentalrestaurationskomponente, aus photosensitivem Ausgangsmaterial gelöst. Innerhalb des Behältnisses oder an einem Boden des Behältnisses ist eine unebene Anschmiegfläche vorhanden, die dazu ausgebildet ist, im Behältnis vorhandenes Ausgangsmaterial an eine unebene Anbaufläche einer Trägerkomponente anzuschmiegen, sodass die Bauteilkomponente an der unebenen Anbaufläche der Trägerkomponente schichtweise anbaubar ist. Dabei wird unter dem Anschmiegen von Ausgangsmaterial an die unebene Anbaufläche verstanden, dass die Anschmiegfläche und die unebene Anbaufläche einander angenähert oder aufeinander aufgesetzt werden können und dabei die Anschmiegfläche und die unebene Anbaufläche einander folgen. Mit anderen Worten verlaufen die Anschmiegfläche und unebene Anbaufläche im Wesentlichen parallel. Bevorzugt sind dabei die Anschmiegfläche und die unebene Anbaufläche derart aufeinander abgestimmt, dass die Anschmiegfläche und die unebene Anbaufläche derart relativ zueinander positioniert werden können, dass zwischen den Flächen ein im Wesentlichen konstanter Abstand von 25 µm bis 200 µm, vorzugsweise von 50 µm bis 100 µm, liegt. Dieser im Wesentlichen konstante Abstand gilt für die gesamte Anbaufläche der Trägerkomponente, d. h. über die gesamte unebene Anbaufläche der Trägerkomponente hinweg wird dieser Abstand eingehalten. Auf diese Weise lässt sich mittels der Anschmiegfläche Ausgangsmaterial an die Anbaufläche andrücken oder anschmiegen. Dabei wird der Abstand von 25 µm bis 200 µm, vorzugsweise von 50 µm bis100 µm, bevorzugt derart gewählt, dass er einer Schichtdicke der schichtweise herzustellenden Bauteilkomponente, insbesondere der herzustellenden Dentalrestauration, entspricht. Somit kann Ausgangsmaterial zwischen die Anschmiegfläche und die unebene Anbaufläche fließen und dort mittels der Belichtungseinheit ausgehärtet werden, sodass eine weitere Schicht auf der unebenen Anbaufläche oder einer bereits auf der unebenen Anbaufläche hergestellten Schicht der Bauteilkomponente entsteht. Es versteht sich in diesem Zusammenhang, dass hierzu das Ausgangsmaterial fließfähig sein muss, d. h. zumindest, wenn es im Behältnis der erfindungsgemäßen Vorrichtung aufgenommen ist, ist das Ausgangsmaterial fließfähig. Mittels eines solchen Behälters lässt sich also besonders effizient ein Mehrkomponentenbauteil, insbesondere eine Mehrkomponenten-Dentalrestauration, herstellen. Das liegt daran, dass zunächst die Trägerkomponente hergestellt wird. Sofern die Trägerkomponente aus einem einzigen Ausgangsmaterial hergestellt wird, können Reinigungsschritte zwischen der Herstellung einzelner Schichten der Trägerkomponente entfallen. Das betrifft zum Beispiel Trägerkomponenten, die additiv oder generativ, d. h. schichtweise, hergestellt sind. In diesem Zusammenhang kann die Trägerkomponente mittels Filamentdruck, Fused Deposition Modeling, oder Selective Laser Sintering hergestellt sein. Alternativ kann die Trägerkomponente auch spanend hergestellt sein, zum Beispiel mittels Fräsen. Wie bereits erwähnt, weist die Trägerkomponente eine unebene Anbaufläche auf. Die Anschmiegfläche macht es dabei möglich, eine weitere Bauteilkomponente des Mehrkomponentenbauteils an die unebene Anbaufläche anzubauen. Nachdem also die Bauteilkomponenten des Mehrkomponentenbauteils nacheinander hergestellt werden und nicht das Mehrkomponentenbauteil insgesamt mittels sich durch zwei oder mehr Bauteilkomponenten erstreckende Schichten hergestellt wird, kann die Anzahl an Reinigungsschritten gegenüber einem Verfahren oder einer Vorrichtung, bei der eine einzelne Schicht aus zwei oder mehr Ausgangsmaterialien hergestellt wird, stark reduziert werden. Dadurch steigt die Effizienz bei der Herstellung des Mehrkomponentenbauteils deutlich an.

Es versteht sich, dass diejenigen Eigenschaften, Merkmale und Effekte, die bereits im Zusammenhang mit der Erfindungsgemäßen Vorrichtung für das Behältnis erläutert wurden, auch für das erfindungsgemäße Behältnis gelten.

In diesem Zusammenhang kann beispielsweise die Anschmiegfläche zumindest teilweise, insbesondere vollständig, gegenüber Abschnitten des Bodens, die nicht die Anschmiegfläche bilden, vertieft angeordnet. Auf diese Weise wird der schwerkraftgetriebene Zufluss von Ausgangsmaterial in den Bereich der Anschmiegfläche gefördert, sodass sichergestellt wird, dass stets ausreichend Ausgangsmaterial im Bereich der Anschmiegfläche vorhanden ist.

Die Anschmiegfläche kann im Zusammenhang mit dem erfindungsgemäßen Behältnis gemäß mehrerer Alternativen hergestellten werden. Beispielsweise lässt sich die Anschmiegfläche spanend herstellen, zum Beispiel indem die Anschmiegfläche in einen Boden des Behältnisses oder in ein innerhalb des Behältnisses angeordnetes Bauteil eingefräst wird. Alternativ ist es möglich, die Anschmiegfläche in einen Boden des Behältnisses oder in ein innerhalb des Behältnisses angeordnetes Bauteil einzulasern. Es werden somit zur Herstellung der Anschmiegfläche gezielt Abschnitte des Bodens oder des innerhalb des Behältnisses angeordneten Bauteils verdampft. Ferner kann die Anschmiegfläche hergestellt werden, indem ein Abschnitt des Bodens des Behältnisses oder ein innerhalb des Behältnisses angeordnetes Bauteil verformt werden. Zu diesem Zweck kann ein Überdruck oder ein Unterdruck verwendet werden, um den Abschnitt des Bodens oder des Bauteils in die gewünschte Form zu bringen. Selbstverständlich können die genannten Verfahren zum Herstellen der Anschmiegfläche auch kombiniert werden.

Gemäß einer Option ist die Anschmiegfläche mit einer Anti-Haftbeschichtung oder einer Anti-Haft-Schicht versehen. Auf diese Weise kann sichergestellt werden, dass eine Bauteilschicht nach dem Belichten nicht in unerwünschter Weise auf der Anschmiegfläche haftet. Das bedeutet, dass die Bauteilschicht nach dem Belichten, wenn überhaupt, lediglich derart an der Anschmiegfläche haftet, dass die Bauteilschicht durch eine Relativbewegung zwischen der Bauplattform und der Anschmiegfläche von der Anschmiegfläche getrennt werden kann, sodass die nächste Bauteilschicht hergestellt werden kann. Eine solche Anti-Haftbeschichtung oder Anti-Haft-Schicht kann aus Silikon oder Polydimethylsiloxan (PDMS) hergestellt sein. Dabei kann die Anti-Haftbeschichtung oder die Anti-Haft-Schicht als integraler Bestandteil der Anschmiegfläche ausgeführt sein.

Optional ist das Behältnis dazu ausgebildet, in einer Vorrichtung zur schichtweisen Herstellung einer Bauteilkomponente verwendet zu werden, die dazu ausgebildet ist, die Bauplattform und das Behältnis kontinuierlich relativ zueinander zu bewegen. Für derartige Verfahren wird unter anderem der Begriff Continuous Liquid Interface Production (CLIP) verwendet. In einem solchen Fall kann die Anti-Haft-Schicht als sogenannte Schmierschicht ausgeführt sein, die beispielsweise aus einem Silikonmaterial hergestellt ist. Eine derartige Schicht gibt kontinuierlich einen dünnen Film an Silikonöl an die Oberfläche ab. Dabei kann das Ausgangsmaterial auf diesem Film, der die eigentliche Schmierschicht darstellt, durch entsprechende Belichtung polymerisieren, ohne direkten Kontakt zur Anti-Haft-Schicht aus Silikonmaterial aufzubauen. Die ausgehärtete Schicht schwebt sozusagen auf dem Film aus Silikonöl und kann leicht durch Anheben der Bauplattform getrennt werden. Dadurch wird die Trennung der ausgehärteten Schicht nach der Belichtung reibungslos und nahezu kraftfrei. Eine derartige Anti-Haft-Schicht ist bevorzugt transparent und elastisch.

Alternativ zur Ausführung der Anti-Haft-Schicht als Schmierschicht kann die Anti-Haft-Schicht als semipermeable Folie ausgebildet sein. Eine solche Folie ist für Ausgangsmaterial, aus dem die Bauteilkomponente hergestellt werden soll, undurchlässig. Gleichzeitig ist die Folie für Luft, insbesondere für Sauerstoff, permeabel d.h. durchlässig. sein, sodass sichergestellt wird, dass im Bereich der Anti-Haft-Schicht das Ausgangsmaterial stets fließfähig ist. Die Luft, insbesondere der Sauerstoff, die bzw. der die Folie durchdringt, kann dabei auf einer Innenseite des Behältnisses eine sogenannte Inhibitionsschicht bilden, vereinfacht gesagt ein Polster, auf der das Ausgangsmaterial aufliegt und ausgehärtet wird. Auch in der Alternative mit semipermeabler Folie schwebt sozusagen die ausgehärtete Schicht auf dieser Inhibitionsschicht und kann leicht durch Anheben der Bauplattform getrennt werden. Dadurch wird die Trennung der ausgehärteten Schicht nach der Belichtung reibungslos und nahezu kraftfrei. Eine derartige Anti-Haft-Schicht ist bevorzugt transparent und elastisch.

Bevorzugt ist die Anschmiegfläche des erfindungsgemäßen Behältnisses lichtdurchlässig. Das ermöglicht es, das Ausgangsmaterial durch die Anschmiegfläche hindurch zu belichten und dadurch auszuhärten. Es ergibt sich ein kompakter Aufbau der Vorrichtung zur schichtweisen Herstellung einer Bauteilkomponente.

Gemäß einer Ausführungsform ist die Anschmiegfläche als Grenzfläche eines vom Boden vorstehenden Vorsprungs ausgeführt. Alternativ ist die Anschmiegfläche zumindest abschnittsweise in den Boden eingearbeitet. Die Anschmiegfläche kann somit direkt im Boden oder mit einem anhand einer Dimensionierung des Vorsprungs wählbaren Abstand vom Boden angeordnet sein. Dabei kann die Anschmiegfläche auch gegenüber einer Ebene, in der sich der Boden erstreckt, gekippt, geneigt oder gedreht sein. Insgesamt lässt sich die Anschmiegfläche also vergleichsweise frei im Inneren des Behältnisses oder an einem Rand des Inneren des Behältnisses positionieren, sodass die Anschmiegfläche anwendungsspezifisch angeordnet werden kann.

Der Boden des Behältnisses kann eine formflexible Folie umfassen, die die unebene Anschmiegfläche bedeckt. Genauer gesagt liegt die formflexible Folie an der unebenen Anschmiegfläche an. Es folgt also die formflexible Folie genau der Geometrie der Anschmiegfläche. Somit liegt die formflexible Folie stets zwischen dem im Behältnis aufgenommenen Ausgangsmaterial und der Anschmiegfläche. In diesem Fall wird das Ausgangsmaterial mittels der Anschmiegfläche und unter zusätzlicher Nutzung der formflexiblen Folie an die Trägerkomponente angeschmiegt. Beispielsweise dichtet in diesem Zusammenhang die formflexible Folie das Behältnis nach unten hin ab. In diesem Fall kann die Anschmiegfläche als Bestandteil oder Merkmal einer Stützplatte ausgeführt sein. Das bedeutet, dass die Stützplatte mit der Anschmiegfläche dazu dient, das Behältnis und das darin aufgenommene Ausgangsmaterial mechanisch zu stabilisieren, wohingegen die Dichtigkeit für Ausgangsmaterial durch die formflexible Folie gewährleistet wird. Die Stützplatte kann beispielsweise aus einem Glasmaterial hergestellt sein.

In einem Fall, in dem die formflexible Folie dem Abdichten des Behältnisses dient und die Anschmiegfläche als Bestandteil oder Merkmal einer Stützplatte ausgeführt ist, ist es ferner denkbar, die Stützplatte mit der Anschmiegfläche als vom Behältnis separates Bauteil auszuführen, z. B. als Ersatzteil oder Nachrüstteil für bestehende Behältnisse, Vorrichtungen oder Systeme.

In einem Fall, in dem der Boden des Behältnisses die formflexible Folie umfasst, kann die bereits erläuterte Anti-Haft-Beschichtung oder Anti-Haft-Schicht durch die Folie gebildet oder als Bestandteil der Folie ausgeführt sein. Es ergeben sich die oben bereits erläuterten Effekte und Vorteile. In einem Fall, in dem die Anti-Haft-Schicht als Folie ausgeführt ist, kann diese aus einem Teflon-Material hergestellt sein.

Ein Boden mit einer formflexiblen Folie ist auch beim Trennen einer gerade hergestellten Schicht einer Bauteilkomponente vorteilhaft. Im Zuge eines solchen Trennvorgangs kann dabei die Folie verformt werden und sich von der Anschmiegfläche abheben. Dadurch entstehen Schälkräfte, die das Ablösen der Schicht der Bauteilkomponente erleichtern. Mittels Relaxation, d.h. elastischem Rückverformen, legt sich die Folie nach vollendeter Trennung wieder direkt an die Anschmiegfläche an. Aufgrund der Bedeutung für das Trennen kann in diesem Zusammenhang die formflexible Folie auch als Trennfolie bezeichnet werden.

Insbesondere lässt sich die bereits beschriebene Variante, in der das Behältnis zur Verwendung in einer Vorrichtung zur schichtweisen Herstellung einer Bauteilkomponente ausgebildet ist, die dazu ausgebildet ist, die Bauplattform und das Behältnis kontinuierlich relativ zueinander zu bewegen, d.h. ein sogenanntes Continuous Liquid Interface Production (CLIP) Verfahren auszuführen, mit der Ausführungsform kombinieren, in der der Boden des Behältnisses eine formflexible Folie umfasst. In einem solchen Fall ist die Anti-Haft-Schicht, die von der Folie gebildet wird oder als Bestandteil der Folie ausgeführt ist, als sogenannte Schmierschicht ausgeführt, die beispielsweise aus einem Silikonmaterial hergestellt ist. Eine derartige Schicht gibt kontinuierlich einen dünnen Film an Silikonöl an die Oberfläche ab. Dabei kann das Ausgangsmaterial auf diesem Film, der die eigentliche Schmierschicht darstellt, durch entsprechende Belichtung polymerisieren, ohne direkten Kontakt zur Anti-Haft-Schicht aus Silikonmaterial aufzubauen. Die ausgehärtete Schicht schwebt sozusagen auf dem Film aus Silikonöl und kann leicht durch Anheben der Bauplattform getrennt werden. Dadurch wird die Trennung der ausgehärteten Schicht nach der Belichtung reibungslos und nahezu kraftfrei. Eine derartige Anti-Haft-Schicht ist bevorzugt transparent und elastisch. Auch kann die formflexible Folie mehrschichtig ausgebildet sein und dabei eine Anti-Haft-Schicht aus semipermeabler Folie umfassen, welche als Alternative zur Schmierschicht dient. Wie bereits erläutert, ist eine solche Folie für Ausgangsmaterial, aus dem die Bauteilkomponente hergestellt werden soll, undurchlässig. Gleichzeitig ist die Folie für Luft, insbesondere für Sauerstoff, permeabel d.h. durchlässig. Die Luft, insbesondere der Sauerstoff, die bzw. der die Folie durchdringt, kann dabei auf einer Innenseite des Behältnisses eine sogenannte Inhibitionsschicht bilden, vereinfacht gesagt ein Polster, auf der das Ausgangsmaterial aufliegt und ausgehärtet wird. Auch in der Alternative mit semipermeabler Folie schwebt sozusagen die ausgehärtete Schicht auf dieser Inhibitionsschicht und kann leicht durch Anheben der Bauplattform getrennt werden. Neben der semipermeablen Folie kann in diesem Zusammenhang die formflexible Folie eine weitere Schicht umfassen, die impermeabel ausgeführt ist. In einer solchen Konfiguration kann die Luft, insbesondere der Sauerstoff zwischen die beiden Schichten der formflexiblen Folie, d.h. zwischen die semipermeable Schicht und die impermeable Schicht eingebracht werden. Dadurch wird die Trennung der ausgehärteten Schicht nach der Belichtung reibungslos und nahezu kraftfrei. Eine derartige Anti-Haft-Schicht ist bevorzugt transparent und elastisch.

Gemäß einem Beispiel umfasst das Behältnis ferner eine Druckeinheit, die zum Anlegen der Folie an die Anschmiegfläche mittels Unterdrucks oder mittels Überdrucks ausgebildet ist. Eine derartige Druckeinheit umfasst beispielsweise einen Strömungskanal, der es erlaubt, die Folie mittels Unterdrucks oder Überdrucks an die Anschmiegfläche anzulegen. Ein derartiger Strömungskanal ist mit einer Unterdruckerzeugungseinheit oder Überdruckerzeugungseinheit koppelbar. Optional kann die Unterdruckerzeugungseinheit oder die Überdruckerzeugungseinheit auch ein Bestandteil der Druckeinheit sein. Mittels einer Druckeinheit lässt sich also die Folie zuverlässig und präzise an die Anschmiegfläche anlegen, sodass sich Bauteilkomponenten mit besonders hoher Präzision herstellen lassen. Ein weiterer Vorteil, der aus dem Anlegen der Folie an die Anschmiegfläche mittels Unterdrucks oder Überdrucks resultiert, liegt in der Tatsache, dass sich durch Einstellen eines entsprechenden Unterdrucks oder Überdrucks justieren lässt, mit welcher Kraft die Folie an die Anschmiegfläche angelegt wird. Auf diese Weise kann zum Beispiel ein gewisses Abheben der Folie von der Anschmiegfläche während eines Trennens einer gerade hergestellten Schicht der Bauteilkomponente von der Folie erlaubt werden. Dies erhöht die Zuverlässigkeit des Trennvorgangs. Aufgrund des Unterdrucks oder Überdrucks wird die Folie danach wieder in eine präzise Anlage an die Anschmiegfläche überführt.

Gemäß einer Variante weist zumindest ein Abschnitt der Anschmiegfläche eine Strukturierung auf. Bevorzugt weist die gesamte Anschmiegfläche eine Strukturierung auf. Dabei kann die Strukturierung eine Mikro- oder Nanostrukturierung sein. Mittels einer derartigen Strukturierung wird das Trennen einer Bauteilschicht von der Anschmiegfläche erleichtert. In einem Fall, in dem eine formflexible Folie vorgesehen ist, die die Anschmiegfläche bedeckt, erleichtert die Strukturierung ein Abheben der formflexiblen Folie von der Anschmiegfläche.

Gemäß einer Variante kann die Anschmiegfläche in einer Draufsicht insgesamt bogenförmig sein. Alternativ umfasst die Anschmiegfläche in der Draufsicht ein bogenförmiges Flächensegment. Dabei ist die insgesamt bogenförmige Anschmiegfläche oder das bogenförmige Flächensegment zum Anschmiegen von Ausgangsmaterial an eine ganz oder teilweise einem menschlichen Kieferbogen folgende Trägerkomponente dimensioniert. Vereinfacht gesagt kann die Anschmiegfläche also hinsichtlich ihrer in einer Draufsicht sichtbaren Form daran angepasst sein, eine Bauteilkomponente an eine Trägerkomponente anzubauen, die ganz oder teilweise einem menschlichen Kieferbogen folgt. Anstelle von bogenförmig oder zusätzlich zu bogenförmig kann dabei ein menschlicher Kieferbogen auch als U-förmig, hufeisenförmig, oder parabelförmig bezeichnet werden. Auf diese Weise lassen sich besonders einfach und effizient Dentalrestaurationskomponenten für dentale Vollprothesen oder dentale Teilprothesen herstellen. In diesem Zusammenhang ist ein menschlicher Kieferbogen beispielsweise 3 cm bis 8 cm breit, wobei die Breite zwischen den jeweils hintersten Backenzähnen oder Molaren gemessen wird. Dabei beträgt die Breite des Kieferbogens für einen vergleichsweise kleinen Kieferbogen also ca. 3 cm, wohingegen eine Breite des Kieferbogens für eine vergleichsweise großen Kieferbogen ca. 8 cm beträgt. Ein mittelgroßer Kieferbogen hat dementsprechend eine Breite von ca. 5 cm.

Die Anschmiegfläche kann eine Wellenform aufweisen, welche mehrere Wellenberge und mehrere Wellentäler umfasst. Die Wellenberge und die Wellentäler sind alternierend angeordnet. In diesem Zusammenhang kann die Anbaufläche der Trägerkomponente eine korrespondierende Wellenform aufweisen, d. h. auch die Anbaufläche kann mehrere Wellenberge und mehrere Wellentäler umfassen, die alternierend angeordnet sind, wobei Wellenberge der Anbaufläche jeweils in Wellentälern der Anschmiegfläche aufgenommen werden können und umgekehrt. Diese Konfiguration erlaubt es, eine Bauteilkomponente zumindest abschnittsweise innerhalb eines oder mehrerer der Wellentäler der Trägerkomponente anzubauen, ohne zwischendurch einen Reinigungsschritt durchführen zu müssen. In einem Fall, in dem die herzustellende Bauteilkomponente eine Dentalrestaurationskomponente ist, lassen sich auf diese Weise originalgetreue Mehrkomponenten-Dentalrestaurationen herstellen, die die herzustellende Bauteilkomponente und die Trägerkomponente umfassen. Das kommt daher, dass bei einem menschlichen Gebiss eine Grenze zwischen Zahnfleisch und Zähnen ebenfalls wellenförmig ist. Dies lässt sich nachbilden, wenn zum Beispiel die Trägerkomponente Zahnfleisch nachbildet, also als Prothesenbasis ausgeführt ist, und die herzustellende Bauteilkomponente einen oder mehrere Ersatzzähne nachbildet. Auch der umgekehrte Fall ist möglich. Dann bildet die Trägerkomponente einen oder mehrere Ersatzzähne nach und die herzustellende Bauteilkomponente bildet Zahnfleisch nach, ist also als Prothesenbasis ausgeführt. Beides Mal wird eine hohe Originaltreue sichergestellt.

Gemäß einer Variante können zumindest manche der Wellenberge und/oder manche der Wellentäler entlang von Richtungen verlaufen, die zusammengenommen ein Strahlenmuster ergeben. Diese Richtungen sind also strahlenförmig angeordnet. Optional kann dabei die strahlenförmige Anordnung dieser Richtungen derart erfolgen, dass alle Richtungen von einem gemeinsamen Mittelpunkt oder einer gemeinsamen Mittellinie ausgehen. Auf diese Weise kann eine Originaltreue weiter gesteigert werden, wenn die herzustellende Bauteilkomponente eine Dentalrestaurationskomponente ist. Das gilt insbesondere dann, wenn die Dentalrestaurationskomponente einen Teil eines Frontzahnbereichs oder den gesamten Frontzahnbereich eines menschlichen Gebisses nachbilden soll. Wie bereits erwähnt, ist auch im Frontzahnbereich ein Übergang zwischen Zahnfleisch und Zähnen wellenförmig. Dabei verlaufen die Wellenberge und Wellentäler entlang von Richtungen, die strahlenförmige von einem gemeinsamen Mittelpunkt ausgehen. Ein Abstand zwischen jeweils benachbarte Richtungen vergrößert sich also, je weiter man sich vom gemeinsamen Mittelpunkt entfernt. Es wird darauf hingewiesen, dass auch im Bereich der Backenzähne, d. h. im Bereich der Molaren und Prämolaren ein Übergang zwischen Zahnfleisch und Zähnen wellenförmig ist. Dabei verlaufen die Wellenberge und Wellentäler entlang von Richtungen, die ebenfalls strahlenförmig angeordnet sind, jedoch abschnittsweise auch parallel verlaufen können.

Die Wellenform kann zumindest abschnittsweise im Wesentlichen als Sinuswelle oder als Kettenlinie oder als Polygonprofil oder als Mischform von wenigstens zwei aus Sinuswelle, Kettenlinie und Polygonprofil ausgebildet sein. In diesem Zusammenhang kann das Polygonprofil zum Beispiel als Rechteckprofil oder Dreieckprofil ausgebildet sein. Ferner wird unter einer Kettenlinie eine Kurve verstanden, die entsprechend eines Durchhangs einer an ihren Enden aufgehängten Kette unter dem Einfluss der Schwerkraft verläuft. Dabei kann es sich um eine Cosinus Hyperbolicus Kurve handeln. Eine Kettenlinie wird dabei oft auch als Seilkurve, Katenoide oder Kettenkurve bezeichnet. Die Wellenform umfasst bevorzugt mehrere Kettenlinien, die aneinander angrenzen. Die Tatsache, dass die Wellenform lediglich im Wesentlichen als Sinuswelle oder als Kettenlinie oder als Polygonprofil oder als Mischform ausgebildet ist, schließt dabei auch Wellenformen ein, die ausgehend von einer idealen Sinuslinien oder einer idealen Kettenlinie abgeflachte oder abgerundet sind. Auf diese Weise lässt sich in einem Fall, in dem die Bauteilkomponente eine Dentalrestaurationskomponente ist, auch eine Mamelon-Geometrie mit hoher Originaltreue nachbilden. Dabei handelt es sich bei einer Mamelon-Geometrie um eine Wellenform im Bereich einer Zahnschneide, die aus mehreren, im Wesentlichen halbrunden Vorsprüngen zusammengesetzt ist. Alternativ kann die Mamelon-Geometrie ausgehend von einer geraden Zahnschneide dadurch beschrieben werden, dass die Zahnschneide mehrere Einziehungen oder Kerben aufweist. Typisch sind dabei zwei Kerben oder Einziehungen und dementsprechend drei Vorsprünge je Zahn. Die Mamelon-Geometrie ist häufig bei Schneidezähnen zu finden.

In einem Beispiel umfasst die Wellenform Wellenberge und Wellentäler mit unterschiedlichen Höhen und/oder mit unterschiedlichen Breiten. Anders gesagt können die Wellenberge und Wellentäler unterschiedliche Amplituden und Perioden aufweisen. In einem Fall, in dem die Bauteilkomponente eine Dentalrestaurationskomponente ist, lassen sich somit originalgetreue Dentalrestaurationskomponenten herstellen, da bei einem menschlichen Gebiss die Taschen, in denen die Zähne angeordnet sind, ebenfalls hinsichtlich ihrer Höhe und Breite unterschiedlich sind. Üblicherweise beträgt dabei die Höhe 0,5 cm bis 1,5 cm und die Breite 0,5 cm bis 1,2 cm.

Dabei kann eine Höhe und/oder eine Breite eines oder mehrerer Wellenberge mit zunehmendem Abstand von einem Mittelpunkt oder von einer Mittellinie zunehmen. Anders gesagt kann die Höhe und/oder Breite zu einem einer Zunge oder einem Gaumen entsprechenden Bereich hin abnehmen. Auch auf diese Weise lässt sich eine Originaltreue weiter steigern, wenn es sich bei der Bauteilkomponente um eine Dentalrestaurationskomponente handelt.

Eine Breite der Wellenberge und/oder eine Breite der Wellentäler kann entlang der bogenförmigen Anschmiegfläche oder des bogenförmigen Flächensegments variieren. Diese Konfiguration trägt der Tatsache Rechnung, dass bei einem menschlichen Gebiss die Zahnfleischtaschen, in denen die Zähne angeordnet sind entlang eines Kieferbogens unterschiedlich breit sind. Wird dies bei einer mittels der Vorrichtung hergestellten Dentalrestaurationskomponente nachgebildet, ergibt sich eine Dentalrestaurationskomponente mit hoher Originaltreue.

Mittels des Behältnisses lässt sich somit in einem Fall, in dem die Dentalrestaurationskomponente einen Abschnitt eines Oberkiefers oder einen gesamten Oberkiefer nachbildet, insbesondere folgendes Muster umsetzen: Im Bereich der Molaren sind die Wellenberge oder Wellentäler vergleichsweise groß. Im Bereich der Prämolaren sind die Wellenberge oder Wellentäler im Vergleich dazu etwas kleiner. Im Bereich der Eckzähne sind die Wellenberge oder Wellentäler größer als bei den Prämolaren und kleiner als bei den Molaren. Im Bereich der seitlichen Schneidezähne sind die Wellenberge oder Wellentäler etwas kleiner als bei den Eckzähnen, jedoch weiterhin nicht so groß wie bei den Molaren. Im Bereich der mittleren Schneidezähne sind die Wellenberge oder Wellentäler relativ groß. Beispielsweise können in diesem Bereich die Wellenberge oder Wellentäler ähnlich groß sein wie bei den Molaren oder Eckzähnen. In einem Fall, in dem die Dentalrestaurationskomponente einen Abschnitt eines Unterkiefers oder einen gesamten Unterkiefer nachbildet, lässt sich insbesondere ein Muster umsetzen, das im Bereich der Molaren, der Prämolaren und der Eckzähne demjenigen Muster entspricht, dass bereits hinsichtlich des Oberkiefers erläutert wurde. Im Unterschied dazu sind jedoch im Bereich aller Schneidezähne die Wellenberge und Wellentäler im Wesentlichen gleich groß und etwas kleiner als im Bereich der Eckzähne. Es wird bemerkt, dass bei Dentalprothesen üblicherweise die sogenannten Weisheitszähne nicht nachgebildet werden.

Gemäß einer Ausführungsform ist innerhalb des Behältnisses oder an einem Boden des Behältnisses eine zusätzliche unebene Anschmiegfläche vorhanden. Die zusätzliche unebene Anschmiegfläche ist dazu ausgebildet, Ausgangsmaterial an eine zusätzliche unebene Anbaufläche einer Trägerkomponente anzuschmiegen, sodass die Bauteilkomponente an der unebenen Anbaufläche der Trägerkomponente anbaubar ist. Dabei wird unter dem Anschmiegen von Ausgangsmaterial an die unebene Anbaufläche verstanden, dass die Anschmiegfläche und die unebene Anbaufläche einander angenähert oder aufeinander aufgesetzt werden können und dabei die Anschmiegfläche und die unebene Anbaufläche einander folgen. Mit anderen Worten verlaufen die Anschmiegfläche und unebene Anbaufläche im Wesentlichen parallel. Bevorzugt sind dabei die Anschmiegfläche und die unebene Anbaufläche derart aufeinander abgestimmt, dass die Anschmiegfläche und die unebene Anbaufläche derart relativ zueinander positioniert werden können, dass zwischen den Flächen ein im Wesentlichen konstanter Abstand von 25 µm bis 200 µm, vorzugsweise von 50 µm bis 100 µm, liegt. Dieser im Wesentlichen konstante Abstand gilt für die gesamte Anbaufläche der Trägerkomponente, d. h. über die gesamte unebene Anbaufläche der Trägerkomponente hinweg wird dieser Abstand eingehalten. Auf diese Weise lässt sich mittels der Anschmiegfläche Ausgangsmaterial an die Anbaufläche andrücken oder anschmiegen. Dabei wird der Abstand von 25 µm bis 200 µm, vorzugsweise von 50 µm bis100 µm, bevorzugt derart gewählt, dass er einer Schichtdicke der schichtweise herzustellenden Bauteilkomponente, insbesondere der herzustellenden Dentalrestauration, entspricht. Somit kann Ausgangsmaterial zwischen die zusätzliche Anschmiegfläche und die zusätzliche unebene Anbaufläche fließen und dort mittels der Belichtungseinheit ausgehärtet werden, sodass eine Schicht auf der zusätzlichen unebenen Anbaufläche oder einer bereits auf der unebenen Anbaufläche hergestellten Schicht der Bauteilkomponente entsteht. In diesem Zusammenhang kann die zusätzliche Anschmiegfläche entweder der bereits erläuterten Anschmiegfläche gleichen oder gegenüber der bereits erläuterten Anschmiegfläche unterschiedlich geformt sein. In einem Fall, in dem sich die beiden Anschmiegflächen gleichen, lassen sich also mit der Vorrichtung parallel zwei Bauteilkomponenten herstellen. Für den Fall, dass sich die beiden Anschmiegflächen unterscheiden, kann jede der zwei Anschmiegflächen an eine andere Trägerkomponente angepasst sein. Somit können mittels einer solchen Vorrichtung besonders effizient zwei verschiedenartige Mehrkomponentenbauteile, insbesondere Mehrkomponenten-Dentalrestaurationen, hergestellt werden, die jeweils unterschiedliche Trägerkomponenten nutzen. Im Falle einer Mehrkomponenten-Dentalrestauration kann beispielsweise eine der Anschmiegflächen für die Herstellung einer Dentalrestauration für den Oberkiefer ausgebildet sein und eine der Anschmiegflächen für die Herstellung einer Dentalrestauration für den Unterkiefer.

Gemäß einem Beispiel ist die zusätzliche Anschmiegfläche zumindest teilweise, insbesondere vollständig, gegenüber Abschnitten des Bodens, die nicht die zusätzliche Anschmiegfläche bilden, vertieft angeordnet. Auf diese Weise wird der schwerkraftgetriebene Zufluss von Ausgangsmaterial in den Bereich der zusätzlichen Anschmiegfläche gefördert, sodass sichergestellt wird, dass stets ausreichend Ausgangsmaterial im Bereich der zusätzlichen Anschmiegfläche vorhanden ist.

Die zusätzliche Anschmiegfläche kann im Zusammenhang mit dem erfindungsgemäßen Behältnis gemäß derselben Alternativen hergestellten werden wie die bereits erläuterte Anschmiegfläche.

Gemäß einer Option ist die zusätzliche Anschmiegfläche mit einer Anti-Haftbeschichtung oder einer Anti-Haft-Schicht versehen. Dabei gilt für die Anti-Haftbeschichtung oder die Anti-Haft-Schicht der zusätzlichen Anschmiegfläche dasselbe, was bereits oben zur Anti-Haftbeschichtung und zur Anti-Haft-Schicht erläutert wurde. Das bedeutet, dass die Anti-Haftbeschichtung oder die Anti-Haft-Schicht von einer formflexiblen Folie gebildet sein kann, die an der zusätzlichen Anschmiegfläche anliegt oder als integraler Bestandteil der zusätzlichen Anschmiegfläche ausgeführt sein kann.

Optional kann im Behältnis zusätzlich eine ebene Fläche vorgesehen sein, über die sich schichtweise eine Bauteilkomponente auf der Bauplattform aufbauen lässt. Dabei kann die ebene Fläche dazu ausgebildet sein, mit der bereits erwähnten Belichtungseinheit zusammenzuwirken, d.h. es kann mittels der bereits erwähnten Belichtungseinheit die Bauteilkomponente schichtweise an die Bauplattform angebaut werden. Alternativ kann der ebenen Fläche eine separate Belichtungseinheit zugeordnet sein. Durch Vorsehen einer derartigen ebenen Fläche wird ein Variantenspektrum an Bauteilkomponenten, die mittels der Vorrichtung schichtweise hergestellt werden können, weiter erhöht. Insbesondere können mittels der ebenen Fläche Bauteilkomponenten hergestellt werden, für deren Herstellung die Anschmiegfläche nicht nötig oder nicht vorteilhaft ist.

Außerdem wird die Aufgabe durch ein System zur schichtweisen Herstellung eines Mehrkomponentenbauteils, insbesondere einer Mehrkomponenten-Dentalrestauration, aus wenigstens einem ersten photosensitiven Ausgangsmaterial und einem zweiten photosensitiven Ausgangsmaterial gelöst. Das System umfasst eine erfindungsgemäße Vorrichtung zur schichtweisen Herstellung einer Bauteilkomponente, deren Behältnis zur Aufnahme des ersten Ausgangsmaterials oder des zweiten Ausgangsmaterials vorgesehen ist. Zusätzlich umfasst das System zumindest ein weiteres Behältnis zur Aufnahme des jeweils anderen aus photosensitivem ersten Ausgangsmaterial und photosensitivem zweiten Ausgangsmaterial. Die Bauplattform der erfindungsgemäßen Vorrichtung ist auch zum Zusammenwirken mit dem weiteren Behältnis ausgebildet. Optional kann ferner die Belichtungseinheit der erfindungsgemäßen Vorrichtung zum Zusammenwirken mit dem weiteren Behältnis ausgebildet sein. Das bedeutet, dass mittels der Belichtungseinheit der erfindungsgemäßen Vorrichtung erstes Ausgangsmaterial oder zweites Ausgangsmaterial, das im weiteren Behältnis aufgenommen ist, belichtet und somit ausgehärtet werden kann. Gemäß einer anderen Option ist das weitere Behältnis mit einer weiteren Belichtungseinheit ausgestattet, wobei die weitere Belichtungseinheit dazu ausgebildet ist, erstes Ausgangsmaterial oder zweites Ausgangsmaterial im weiteren Behältnis zu belichten und somit auszuhärten. Es wird betont, dass in diesem Zusammenhang das weitere Behältnis nicht zwingend mit einer unebenen Anschmiegfläche ausgestattet sein muss. Bevorzugt kann mittels des weiteren Behältnisses und des darin aufgenommenen Ausgangsmaterials, eine Bauteilkomponente hergestellt werden, die im Zusammenwirken mit der erfindungsgemäßen Vorrichtung als Trägerkomponente wirkt. Somit kann aus einem der Ausgangsmaterialien die Trägerkomponente hergestellt werden und dann mittels des anderen Ausgangsmaterials eine Bauteilkomponente an die Trägerkomponente angebaut werden. Dabei ist die Bauplattform der erfindungsgemäßen Vorrichtung auch dazu ausgebildet, mit dem weiteren Behältnis zusammenzuwirken. Das bedeutet, dass eine an der Bauplattform angebaute Bauteilkomponente, zum Beispiel Trägerkomponente, nicht von der Bauplattform abgenommen werden muss, wenn beispielsweise mittels der erfindungsgemäßen Vorrichtung eine weitere Bauteilkomponente angebaut werden soll. Folglich lassen sich in effizienter Art und Weise Mehrkomponentenbauteile, insbesondere Mehrkomponenten-Dentalrestaurationen, herstellen.

Das System kann ferner eine Reinigungseinheit zum Reinigen wenigstens einer Bauteilkomponente des Mehrkomponentenbauteils umfassen. Mittels der Reinigungseinheit kann überschüssiges, unausgehärtetes Ausgangsmaterial von einer Bauteilkomponente oder einem Abschnitt der Bauteilkomponente, d. h. von ausgehärtetem Ausgangsmaterial, entfernt werden. Dabei wird mittels einer Reinigungseinheit auch verhindert, dass sich erstes Ausgangsmaterial und zweites Ausgangsmaterialien in unerwünschter Weise mischen. Wie bereits erläutert, ermöglicht die Anschmiegfläche, dass zunächst eine erste Bauteilkomponente vollständig hergestellt wird und danach eine weitere Bauteilkomponente an die erste Bauteilkomponente angebaut wird. In diesem Zusammenhang kann die erste Bauteilkomponente als Trägerkomponente bezeichnet werden. In einem solchen Szenario muss die zuerst hergestellte Bauteilkomponente lediglich nach ihrer Fertigstellung einmal mittels der Reinigungseinheit gereinigt werden. Sodann kann die zweite Bauteilkomponente daran angebaut werden. Insgesamt lässt sich so ein Mehrkomponentenbauteil von hoher Qualität produzieren.

Auch wird die Aufgabe durch ein Verfahren zur schichtweisen Herstellung eines Mehrkomponentenbauteils, insbesondere einer Mehrkomponenten-Dentalrestauration, aus wenigstens einem ersten photosensitiven Ausgangsmaterial und einem zweiten photosensitiven Ausgangsmaterial gelöst. Das Verfahren umfasst:
- schichtweises Herstellen einer ersten Bauteilkomponente des Mehrkomponentenbauteils aus dem ersten photosensitiven Ausgangsmaterial oder aus dem zweiten photosensitiven Ausgangsmaterial, wobei die erste Bauteilkomponente eine unebene Anbaufläche aufweist, die zum Anbauen einer zweiten Bauteilkomponente des Mehrkomponentenbauteils vorgesehen ist, und
- schichtweises Anbauen der zweiten Bauteilkomponente des Mehrkomponentenbauteils aus dem jeweils anderen aus erstem photosensitiven Ausgangsmaterial und zweitem photosensitiven Ausgangsmaterial, wobei die zweite Bauteilkomponente an die unebene Anbaufläche der ersten Bauteilkomponente angebaut wird und wobei mittels einer Anschmiegfläche das jeweils andere aus erstem photosensitiven Ausgangsmaterial und zweitem photosensitiven Ausgangsmaterial an die unebene Anbaufläche der ersten Bauteilkomponente angeschmiegt wird.

In diesem Zusammenhang kann die erste Bauteilkomponente auch als Trägerkomponente bezeichnet werden, an die die zweite Bauteilkomponente schichtweise angebaut wird. Folglich lassen sich in effizienter Art und Weise Mehrkomponentenbauteile, insbesondere Mehrkomponenten-Dentalrestaurationen, herstellen.

Wie bereits hinsichtlich der erfindungsgemäßen Vorrichtung erläutert, sind auch im erfindungsgemäßen System die Bauplattform und das weitere Behältnis relativ zueinander beweglich gelagert. Das kann gemäß mehrerer Alternativen realisiert sein. Gemäß einer ersten Alternative ist das weitere Behältnis stationär, d. h. unbeweglich. Die Bauplattform hingegen ist beweglich gelagert, sodass sie sich relativ zum Behältnis bewegen kann. Beispielsweise lässt sich hierzu die Bauplattform translatorisch und/oder rotatorisch bewegen. Gemäß einer zweiten Alternative ist die Bauplattform stationär, d. h. unbeweglich. Das weitere Behältnis hingegen ist beweglich gelagert, sodass es sich relativ zur Bauplattform bewegen kann. Beispielsweise lässt sich hierzu das weitere Behältnis translatorisch und/oder rotatorisch bewegen. Auch eine Kombination der ersten Alternative und der zweiten Alternative ist denkbar. In allen Alternativen ist dabei die Bauplattform entweder in einem Inneren des weiteren Behältnisses vorhanden oder kann in ein Inneres des weiteren Behältnisses hinein bewegt werden. Dabei sind insbesondere das weitere Behältnis und die Bauplattform entlang eine Richtung relativ zueinander beweglich, die parallel zu einer Baurichtung verläuft, entlang derer die Bauteilkomponente aufgebaut wird.

Das Verfahren kann ferner umfassen: Reinigen der ersten Bauteilkomponente vor dem Anbauen der zweiten Bauteilkomponente. Wie bereits erwähnt, wird beim Reinigen unausgehärtetes Ausgangsmaterial von einer Bauteilkomponente oder einem Abschnitt der Bauteilkomponente, d. h. von ausgehärtetem Ausgangsmaterial, entfernt. Dabei wird mittels der Reinigung auch verhindert, dass sich erstes Ausgangsmaterial und zweites Ausgangsmaterialien in unerwünschter Weise mischen. Wie bereits erläutert, ermöglicht die Anschmiegfläche, dass zunächst eine erste Bauteilkomponente vollständig hergestellt wird und danach eine weitere Bauteilkomponente an die erste Bauteilkomponente angebaut wird. In diesem Zusammenhang kann die erste Bauteilkomponente als Trägerkomponente bezeichnet werden. In einem solchen Szenario muss die zuerst hergestellte Bauteilkomponente lediglich nach ihrer Fertigstellung einmal gereinigt werden. Sodann kann die zweite Bauteilkomponente daran angebaut werden. Insgesamt lässt sich so ein Mehrkomponentenbauteil von hoher Qualität produzieren.

Es versteht sich, dass Merkmale, Effekte und/oder Vorteile, die im Zusammenhang mit einem aus erfindungsgemäßer Vorrichtung, erfindungsgemäßem Behältnis, erfindungsgemäßem System und erfindungsgemäßem Verfahren erwähnt wurden, auch für die jeweils anderen aus erfindungsgemäßer Vorrichtung, erfindungsgemäßem Behältnis, erfindungsgemäßem System und erfindungsgemäßem Verfahren gelten.

Die Erfindung wird nachstehend anhand verschiedener Ausführungsbeispiele erläutert, die in den beigefügten Zeichnungen gezeigt sind. Es zeigen:
- Figur 1: ein erfindungsgemäßes System zur schichtweisen Herstellung eines Mehrkomponentenbauteils gemäß einer ersten Ausführungsform mit einer erfindungsgemäßen Vorrichtung zur schichtweisen Herstellung einer Bauteilkomponente, welche ein erfindungsgemäßes Behältnis umfasst, wobei mittels des erfindungsgemäßen Systems ein erfindungsgemäßes Verfahren zur schichtweisen Herstellung eines Mehrkomponentenbauteils ausgeführt werden kann,
- Figur 2: eine Detailansicht des Systems aus Figur 1 entlang einer Richtung II in Figur 1,
- Figur 3: das Detail aus Figur 2 in einer perspektivischen Ansicht,
- Figur 4: das System aus Figur 1 in einem ersten Zustand während der Ausführung des erfindungsgemäßen Verfahrens zur schichtweisen Herstellung eines Mehrkomponentenbauteils,
- Figur 5: das System aus Figur 1 in einem optionalen zweiten Zustand während der Ausführung des erfindungsgemäßen Verfahrens zur schichtweisen Herstellung eines Mehrkomponentenbauteils,
- Figur 6: das System aus Figur 1 in einem dritten Zustand während der Ausführung des erfindungsgemäßen Verfahrens zur schichtweisen Herstellung eines Mehrkomponentenbauteils,
- Figur 7: das System aus Figur 1 in einem vierten Zustand während der Ausführung des erfindungsgemäßen Verfahrens zur schichtweisen Herstellung eines Mehrkomponentenbauteils,
- Figur 8: das System aus Figur 1 in einem fünften Zustand während der Ausführung des erfindungsgemäßen Verfahrens zur schichtweisen Herstellung eines Mehrkomponentenbauteils,
- Figur 9: das System aus Figur 1 in einem sechsten Zustand während der Ausführung des erfindungsgemäßen Verfahrens zur schichtweisen Herstellung eines Mehrkomponentenbauteils,
- Figur 10: schematisch die Herstellung von im Wesentlichen ebenen Abschnitten der Bauteilkomponente ausgehend von einem Abschnitt der Bauteilkomponente mit einer Kavität,
- Figur 11: ein erfindungsgemäßes System zur schichtweisen Herstellung eines Mehrkomponentenbauteils gemäß einer zweiten Ausführungsform mit einer erfindungsgemäßen Vorrichtung zur schichtweisen Herstellung einer Bauteilkomponente, welche ein erfindungsgemäßes Behältnis umfasst, wobei mittels des erfindungsgemäßen Systems ein erfindungsgemäßes Verfahren zur schichtweisen Herstellung eines Mehrkomponentenbauteils ausgeführt werden kann,
- Figur 12: ein erfindungsgemäßes System zur schichtweisen Herstellung eines Mehrkomponentenbauteils gemäß einer dritten Ausführungsform mit einer erfindungsgemäßen Vorrichtung zur schichtweisen Herstellung einer Bauteilkomponente, welche ein erfindungsgemäßes Behältnis umfasst, wobei mittels des erfindungsgemäßen Systems ein erfindungsgemäßes Verfahren zur schichtweisen Herstellung eines Mehrkomponentenbauteils ausgeführt werden kann und wobei das System in einem ersten Zustand dargestellt ist,
- Figur 13: das System aus Figur 12 in einem zweiten Zustand während der Ausführung des erfindungsgemäßen Verfahrens zur schichtweisen Herstellung eines Mehrkomponentenbauteils,
- Figur 14: das System aus Figur 12 in einem dritten Zustand während der Ausführung des erfindungsgemäßen Verfahrens zur schichtweisen Herstellung eines Mehrkomponentenbauteils,
- Figur 15: das System aus Figur 12 in einem vierten Zustand während der Ausführung des erfindungsgemäßen Verfahrens zur schichtweisen Herstellung eines Mehrkomponentenbauteils,
- Figur 16: eine Detailansicht der Anschmiegfläche des Systems aus Figur 12
- Figur 17: ein erfindungsgemäßes System zur schichtweisen Herstellung eines Mehrkomponentenbauteils gemäß einer vierten Ausführungsform mit einer erfindungsgemäßen Vorrichtung zur schichtweisen Herstellung einer Bauteilkomponente, welche ein erfindungsgemäßes Behältnis umfasst, wobei mittels des erfindungsgemäßen Systems ein erfindungsgemäßes Verfahren zur schichtweisen Herstellung eines Mehrkomponentenbauteils ausgeführt werden kann,
- Figur 18: ein Detail XVIII eines Abschnitts des Systems aus Figur 17 und eines Abschnitts eines mittels des Systems in Herstellung befindlichen Mehrkomponentenbauteils,
- Figur 19: in einer dreidimensionalen Ansicht einen Abschnitt der Vorrichtung zur schichtweisen Herstellung bei Betrachtung entlang der Richtung XIX in Figur 17, wobei auch ein Abschnitt des Mehrkomponentenbauteils dargestellt ist,
- Figur 20: ein erfindungsgemäßes System zur schichtweisen Herstellung eines Mehrkomponentenbauteils gemäß einer fünften Ausführungsform mit einer erfindungsgemäßen Vorrichtung zur schichtweisen Herstellung einer Bauteilkomponente, welche ein erfindungsgemäßes Behältnis umfasst, wobei mittels des erfindungsgemäßen Systems ein erfindungsgemäßes Verfahren zur schichtweisen Herstellung eines Mehrkomponentenbauteils ausgeführt werden kann,
- Figur 21: eine Draufsicht auf ein erfindungsgemäßes Behältnis für ein erfindungsgemäßes System zur schichtweisen Herstellung eines Mehrkomponentenbauteils gemäß einer sechsten Ausführungsform, wobei mittels des erfindungsgemäßen Systems ein erfindungsgemäßes Verfahren zur schichtweisen Herstellung eines Mehrkomponentenbauteils ausgeführt werden kann,
- Figur 22: eine perspektivische Ansicht eines Bodens des Behältnisses aus Figur 21,
- Figur 23: eine Draufsicht auf ein erfindungsgemäßes Behältnis für ein erfindungsgemäßes System zur schichtweisen Herstellung eines Mehrkomponentenbauteils gemäß einer siebten Ausführungsform, wobei mittels des erfindungsgemäßen Systems ein erfindungsgemäßes Verfahren zur schichtweisen Herstellung eines Mehrkomponentenbauteils ausgeführt werden kann,
- Figur 24: eine Draufsicht auf ein erfindungsgemäßes Behältnis für ein erfindungsgemäßes System zur schichtweisen Herstellung eines Mehrkomponentenbauteils gemäß einer achten Ausführungsform, wobei mittels des erfindungsgemäßen Systems ein erfindungsgemäßes Verfahren zur schichtweisen Herstellung eines Mehrkomponentenbauteils ausgeführt werden kann,
- Figur 25: eine Möglichkeit eines Aufbaus eines erfindungsgemäßen Behältnisses, das in einer erfindungsgemäßen Vorrichtung zur schichtweisen Herstellung einer Bauteilkomponente verwendet werden kann, wobei das Behältnis in einem ersten Zustand dargestellt ist, und
- Figur 26: das Behältnis aus Figur 25 in einem zweiten Zustand.

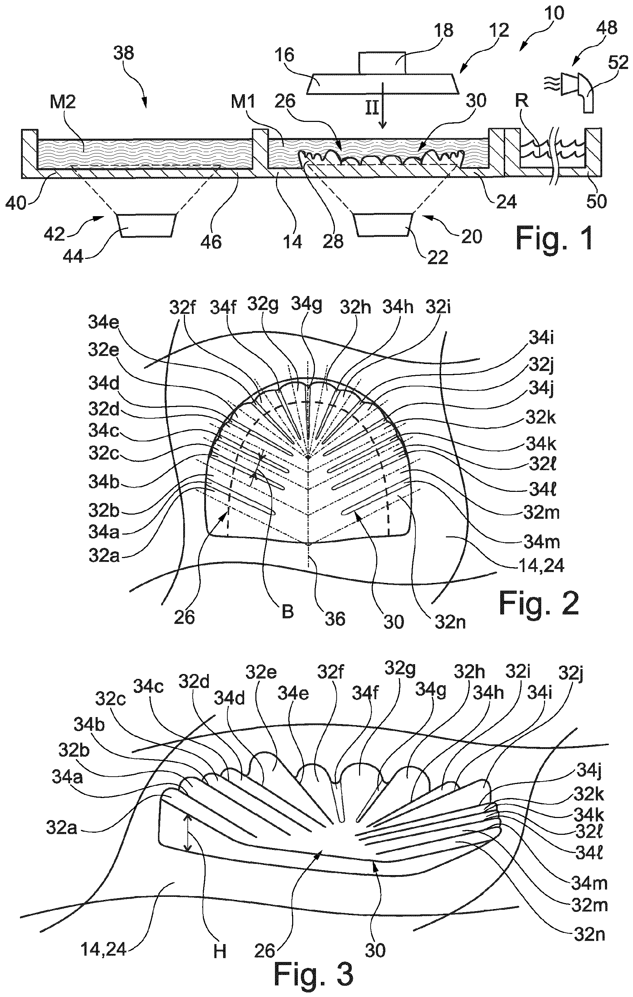

Figur 1 zeigt ein System 10 zur schichtweisen Herstellung eines Mehrkomponentenbauteils aus einem ersten photosensitiven Ausgangsmaterial M1 und einem zweiten photosensitiven Ausgangsmaterial M2.

In den nachfolgend im Zusammenhang mit den Figuren erläuterten Beispielen ist das Mehrkomponentenbauteil eine Mehrkomponenten-Dentalrestauration, die hier als Vollprothese ausgeführt ist.

Das System 10 umfasst eine Vorrichtung 12 zur schichtweisen Herstellung einer Bauteilkomponente aus dem ersten photosensitiven Ausgangsmaterial M1, die vorliegend eine Dentalrestaurationskomponente ist, d.h. eine Komponente der Mehrkomponenten-Dentalrestauration. Wie nachfolgend noch deutlich werden wird, ist im vorliegenden Beispiel diese Dentalrestaurationskomponente eine Ersatzzahngruppierung.

Die Vorrichtung 12 umfasst ein Behältnis 14 zur Aufnahme des ersten Ausgangsmaterials M1. Insbesondere ist dabei erstes Ausgangsmaterial M1 in fließfähiger Form in einem Inneren des Behältnisses 14 aufgenommen. Das Behältnis 14 ist dabei eine Wanne.

Darüber hinaus umfasst die Vorrichtung 12 eine Bauplattform 16, die relativ zum Behältnis 14 beweglich gelagert ist. Genauer gesagt ist die Bauplattform 16 mit einem lediglich schematisch dargestellten Antrieb 18 gekoppelt, sodass die Bauplattform relativ zum Behältnis 14 angetrieben und verfahren werden kann. In der dargestellten Ausführungsform lässt sich dabei die Bauplattform 16 sowohl in vertikaler Richtung als auch in Horizontalrichtung relativ zum Behältnis 14 bewegen, wobei das Behältnis 14 feststehend ausgeführt ist.

Ferner ist an der Bauplattform 16 die Bauteilkomponente schichtweise anbaubar, wie nachfolgend noch im Detail erläutert werden wird.

Zudem umfasst die Vorrichtung 12 eine Belichtungseinheit 20, die in den Figuren schematisch durch eine Lichtquelle 22 und einen zugeordneten Belichtungskegel illustriert ist. Mittels der Belichtungseinheit 20 lässt sich das erste Ausgangsmaterial M1 im Inneren des Behältnisses 14 ortsspezifischen belichten und daher auch ortsspezifischen aushärten.

Nachdem die Lichtquelle 22 im dargestellten Beispiel unterhalb eines Bodens 24 des Behältnisses 14 angeordnet ist, ist der Boden 24 insgesamt oder zumindest in denjenigen Bereichen, in denen ein Bauteil schichtweise aufgebaut werden soll, transparent.

Im dargestellten Beispiel lässt sich somit mittels der Vorrichtung 12 ein Stereolithografie-Verfahren ausführen, mittels dem an der Bauplattform 16 die Bauteilkomponente durch ortsselektive Belichtung mittels der Belichtungseinheit 20 schichtweise aufgebaut werden kann.

Dabei ist am Boden 24 des Behältnisses 14 eine unebene Anschmiegfläche 26 vorhanden (siehe insbesondere auch Figuren 2 und 3).

Die Anschmiegfläche 26 ist im Beispiel aus Figur 1 als Grenzfläche eines vom Boden 24 vorstehenden Vorsprungs 28 ausgebildet. Dabei ist der Vorsprung 28 so dimensioniert, dass ein tiefster Punkt der Anschmiegfläche 26 mit dem Boden 24 des Behältnisses 14 zusammenfällt.

Ferner ist im Beispiel aus Figur 1 die Anschmiegfläche 26 dazu ausgebildet, im Behältnis 14 vorhandenes erstes Ausgangsmaterial M1 an eine unebene Anbaufläche einer Trägerkomponente, die vorliegend ebenfalls eine Dentalrestaurationskomponente ist, anzuschmiegen. Nachdem mittels der Vorrichtung 12 eine Ersatzzahngruppierung schichtweise hergestellt werden kann, ist vorliegend die Trägerkomponente eine Prothesenbasis.

Das bedeutet, dass eine Anbaufläche einer Trägerkomponente parallel zu einem Abschnitt der Anschmiegfläche 26 verläuft, sofern die Trägerkomponente auf die Anschmiegfläche 26 aufgesetzt wird. In diesem Zustand hat im Wesentlichen jeder Punkt der Anbaufläche einen im Wesentlichen konstanten Abstand von 25 µm bis 200 µm, vorzugsweise von 50 µm bis 100 µm, von der Anschmiegfläche 26.

Dabei entspricht der Abstand von 25 µm bis 200 µm, vorzugsweise von 50 µm bis 100 µm, einer Schichtdicke der schichtweise herzustellenden Bauteilkomponente, d.h. der schichtweise mittels de Vorrichtung 12 herzustellenden Dentalrestaurationskomponente, die vorliegend eine Ersatzzahngruppierung ist.

Die Anschmiegfläche 26 kann somit auch als Gegengeometrie für die Anbaufläche der Trägerkomponente, d.h. der Prothesenbasis, bezeichnet werden.

Zu diesem Zweck weist die Anschmiegfläche 26 eine Wellenform 30 auf, die mehrere Wellenberge 32a bis 32n und mehrere Wellentäler 34a bis 34m umfasst, die alternierend angeordnet sind (siehe Figur 2).

Dabei verlaufen in der dargestellten Ausführungsform sowohl die Wellenberge 32a bis 32n als auch die Wellentäler 34a bis 34m entlang von Richtungen, die strahlenförmige von einer Mittellinie 36 ausgehen. Es versteht sich dabei, dass die Mittellinie 36 lediglich virtuell ist, also nicht direkt an der Anschmiegfläche 26 ersichtlich. Dies ist in Figur 2 illustriert, wobei die Mittellinie 36 als Strich-Punkt-Linie dargestellt ist und die Richtungen, entlang derer sich die Wellenberge 32a bis 32n erstrecken als gestrichelten Linien illustriert sind. Die Richtungen, entlang derer sich die Wellentäler 34a bis 34m erstrecken sind aus Gründen der besseren Übersichtlichkeit nicht separat dargestellt, verlaufen aber analog zu den Richtungen der Wellenberge 32a bis 32n.

Dabei ist im dargestellten Ausführungsbeispiel ein Rand jedes Querschnitts eines Wellenbergs 32a bis 32n als Kettenlinie ausgeführt. Das bedeutet, dass ein Rand jedes Querschnitts jedes Wellenbergs 32a bis 32n als Cosinus Hyperbolicus Kurve beschrieben werden kann.

Die Querschnitte der Wellentäler 34a bis 34m ergeben sich durch die Zwischenräume jeweils benachbarter Wellenberge 32a bis 32n.

Ferner nimmt für jeden der Wellenberge 32a bis 32n eine Höhe H mit zunehmendem Abstand von der Mittellinie 36 zu (siehe Figur 3). Der besseren Übersichtlichkeit wegen ist dabei lediglich für einen Wellenberg die Höhe H eingezeichnet.

Was die Breite B der Wellenberge 32a bis 32n betrifft, so haben die Wellenberge 32a bis 32d und 32k bis 32n im Wesentlichen eine konstante Breite B über ihre gesamte Erstreckung.

Bei den Wellenbergen 32e bis 32j ist das anders. Bei diesen Wellenbergen vergrößert sich die Breite B mit zunehmendem Abstand von der Mittellinie 36 (siehe Figur 2). Der besseren Übersichtlichkeit wegen ist wieder nur lediglich bei einem Wellenberg die Breite B eingezeichnet.

Es ergeben sich somit entlang eines auf der Anschmiegfläche 26 definierten Bogens, der einem Verlauf eines menschlichen Kieferbogens nachahmt und in Figur 2 durch eine punktierte Linie illustriert ist, Wellenberge 32a bis 32n und Wellentäler 34a bis 34m mit unterschiedlichen Höhen H und unterschiedlichen Breiten B.

**In** diesem Zusammenhang sind die Wellenberge 32a, 32b, 32m und 32n Zahntaschen für Molaren zugeordnet. Diese Wellenberge 32a, 32b, 32m, 32n haben somit eine vergleichsweise große Breite B und optional eine vergleichsweise große Höhe H.

Es wird bemerkt, dass die in den Figuren dargestellten Wellenberge 32a bis 32n und Wellentäler 34a bis 34m lediglich Beispiele sind. Je nach herzustellender Bauteilkomponente können die Formen der Wellenberge 32a bis 32n und Wellentäler 34a bis 34m, d.h. insbesondere deren Breiten B und Höhen **H,** auch anders sein, z. B. patientenindividuell.

Die Wellenberge 32c, 32d sowie 32k und 321 sind Zahntaschen für Prämolaren zugeordnet. Die Wellenberge 32c, 32d, 32k und 321 sind folglich sowohl schmäler als die Wellenberge 32a, 32b, 32m, 32n, als auch weniger hoch als die Wellenberge 32a, 32b, 32m und 32n.

Die Wellenberge 32e und 32j sind Zahntaschen für Eckzähne zugeordnet. Dementsprechend ist im dargestellten Ausführungsbeispiel eine Breite der Wellenberge 32e, 32j größer als eine Breite derjenigen Wellenberge 32c, 32d sowie 32k und 321, die Zahntaschen für Prämolaren zugeordnet sind und kleiner als eine Breite B derjenigen Wellenberge 32a, 32b, 32m und 32n, die Zahntaschen für Molaren zugeordnet sind. Eine Höhe H der Wellenberge 32e und 32j entspricht im Wesentlichen einer Höhe derjenigen Wellenberge 32a, 32b, 32m, 32n, die Zahntaschen für Molaren zugeordnet sind.

Im Bereich der seitlichen Schneidezähne sind die Wellenberge oder Wellentäler etwas kleiner als bei den Eckzähnen, jedoch weiterhin nicht so groß wie bei den Molaren. Im Bereich der mittleren Schneidezähne sind die Wellenberge oder Wellentäler relativ groß. Beispielsweise können in diesem Bereich die Wellenberge oder Wellentäler ähnlich groß sein wie bei den Molaren oder Eckzähnen

Die Wellenberge 32f bis 32i sind Zahntaschen für Schneidezähne zugeordnet. Dabei haben die Wellenberge 32f und 32i, die Zahntaschen für die seitlichen Schneidezähne zugeordnet sind, eine etwas kleinere Breite B als die Wellenberge 32g und 32h, die Zahntaschen für die mittleren Schneidezähne zugeordnet sind. Dabei ist die Breite B der Wellenberge 32f und 32i etwas kleiner als bei den Eckzähnen, jedoch weiterhin nicht so groß wie bei den Molaren. Die Breite B der Wellenberge 32g und 32h entspricht im Wesentlichen der Breite B derjenigen Wellenberge 32e, 32j, die den Eckzähnen zugeordnet sind. Auch eine Höhe H der Wellenberge 32f bis 32i ist im Wesentlichen gleich. Dabei ist die Höhe H dieser Wellenberge kleiner als eine Höhe H derjenigen Wellenberge 32c, 32d sowie 32k und 321, die den Zahntaschen für die Prämolaren zugeordnet sind.

Zusammenfassend umfasst die Wellenform 30 also Wellenberge 32a bis 32n und Wellentäler 34a bis 34m mit unterschiedlichen Höhen H sowie mit unterschiedlichen Breiten B.

Damit durch die Anschmiegfläche 26 hindurch erstes Ausgangsmaterial M1 mittels der Belichtungseinheit 20 ausgehärtet werden kann, sind die Anschmiegfläche 26 und die darunterliegenden Abschnitte des Vorsprungs 28 sowie der Boden 24 des Behältnisses 14 lichtdurchlässig ausgeführt. Ferner ist dabei die Anschmiegfläche 26 lichtleitend mit der Belichtungseinheit 20, genauer gesamt mit der Lichtquelle 22, gekoppelt.

Das System 10 umfasst darüber hinaus eine weitere Vorrichtung 38 zur schichtweisen Herstellung einer Bauteilkomponente, bei der es sich vorliegend wieder um eine Dentalrestaurationskomponente handelt. Die weitere Vorrichtung 38 verwendet hierzu ein zweites Ausgangsmaterial M2, das photosensitiv ist.

Auch die weitere Vorrichtung 38 umfasst zu diesem Zweck ein Behältnis 40, das zur Aufnahme des zweiten Ausgangsmaterial M2 ausgebildet ist und im dargestellten Ausführungsbeispiel zweites Ausgangsmaterial M2 in fließfähiger Form beinhaltet. Das Behältnis 40 ist als Wanne ausgeführt und kann auch als weiteres Behältnis 40 bezeichnet werden.

Zudem umfasst die weitere Vorrichtung 38 eine Belichtungseinheit 42, die in den Figuren schematisch durch eine Lichtquelle 44 und einen zugeordneten Belichtungskegel illustriert ist. Mittels der Belichtungseinheit 42 lässt sich das zweite Ausgangsmaterial M2 im Inneren des Behältnisses 40 ortsspezifischen belichten und daher auch ortsspezifischen aushärten.

Nachdem die Lichtquelle 44 im dargestellten Beispiel unterhalb eines Bodens 46 des Behältnisses 40 angeordnet ist, ist der Boden 46 insgesamt oder zumindest in denjenigen Bereichen, in denen ein Bauteil schichtweise aufgebaut werden soll, transparent.

Im Unterschied zur Vorrichtung 12 ist dabei der Boden 46 des Behältnisses 40 der weiteren Vorrichtung 38 eben ausgeführt, umfasst also keine Anschmiegfläche.

Die weitere Vorrichtung 38 weist auch keine zusätzliche Bauplattform auf. Vielmehr kann in der dargestellten Ausführungsform die Bauplattform 16 derart verfahren werden, dass sie sowohl zum schichtweisen Aufbau einer Bauteilkomponente aus erstem Ausgangsmaterial M1, das im Behältnis 14 aufgenommen ist, als auch zum schichtweisen Aufbau einer Bauteilkomponente aus zweitem Ausgangsmaterial M2, das im Behältnis 40 aufgenommen ist, ausgebildet ist. Zusätzlich oder alternativ hierzu ist das weitere Behältnis 40 verfahrbar ausgeführt. Mit anderen Worten ist die Bauplattform 16, die bereits im Zusammenhang mit der Vorrichtung 12 erläutert wurde, auch zum Zusammenwirken mit der weiteren Vorrichtung 38 ausgebildet und dementsprechend mittels des Antriebs 18 verfahrbar.

Im dargestellten Beispiel lässt sich somit auch mittels der weiteren Vorrichtung 38 ein Stereolithografie-Verfahren ausführen, mittels dem an der Bauplattform 16 die Bauteilkomponente durch ortsselektive Belichtung mittels der Belichtungseinheit 42 schichtweise aufgebaut wird.

Alternativ zur vorgenannten Konfiguration, in der eine weitere Vorrichtung 38 mit einem weiteren Behältnis 40 und einer weiteren Belichtungseinheit 42 vorgesehen ist, ist es auch möglich, dass lediglich ein weiteres Behältnis 40 vorgesehen wird. In diesem Fall ist die Belichtungseinheit 20 auch dazu ausgebildet, im weiteren Behältnis 40 vorhandenes zweites Ausgangsmaterial M2 zu belichten und dadurch auszuhärten. Hierfür müssen das weitere Behältnis 40 und die Belichtungseinheit 20 relativ zueinander beweglich gelagert sein. Dies kann durch eine bewegliche Lagerung der Belichtungseinheit 20 und/oder durch eine bewegliche Lagerung des weiteren Behältnisses 40 erreicht werden.

Ferner umfasst das System 12 eine Reinigungseinheit 48, die zum Reinigen wenigstens einer Bauteilkomponente ausgeführt ist.

In der dargestellten Ausführungsform umfasst die Reinigungseinheit ein Behältnis 50, in dem eine Reinigungsflüssigkeit R aufgenommen werden kann. In der dargestellten Ausführungsform ist in einem Inneren des Behältnisses 50 eine Reinigungsflüssigkeit R vorhanden. Auch das Behältnis 50 ist als Wanne ausgeführt.

Darüber hinaus umfasst die Reinigungseinheit 48 eine Druckluftvorrichtung 52, mittels der sich eine Bauteilkomponente durch Beaufschlagung mit Druckluft reinigen lässt.

Dabei sind die Bauplattform 16 und der zugeordnete Antrieb 18 derart ausgebildet, dass sich eine an der Bauplattform 16 angebaute Bauteilkomponente mittels der Bauplattform 16 in die Reinigungsflüssigkeit R im Behältnis 50 eintauchen lässt und/oder mittels der Druckluftvorrichtung durch Druckluftbeaufschlagung reinigen lässt.

Mittels des Systems 10 zur schichtweisen Herstellung eines Mehrkomponentenbauteils 54 lässt sich ein Verfahren zur schichtweisen Herstellung eines Mehrkomponentenbauteils 54 ausführen. Nachdem in den in den Figuren dargestellten Ausführungsbeispielen das Mehrkomponentenbauteil 54 eine Mehrkomponenten-Dentalrestauration 54 ist, wird vorliegend für das Mehrkomponentenbauteil 54 und die Mehrkomponenten-Dentalrestauration dasselbe Bezugszeichen verwendet.

Wie bereits erwähnt, handelt es sich bei der Mehrkomponenten-Dentalrestauration 54 um eine dentale Vollprothese.

Das Verfahren wird nachfolgend anhand der Figuren 1 bis 9 erläutert.

Dabei zeigt die Figur 1 das System 10 im Ausgangszustand, d. h. in einem Zustand, in dem noch nicht mit der Herstellung der Mehrkomponenten-Dentalrestauration 54 begonnen wurde.

Die Mehrkomponenten-Dentalrestauration 54 umfasst eine erste Bauteilkomponente 56, die vorliegend eine erste Dentalrestaurationskomponente 56 in Form einer Prothesenbasis ist.

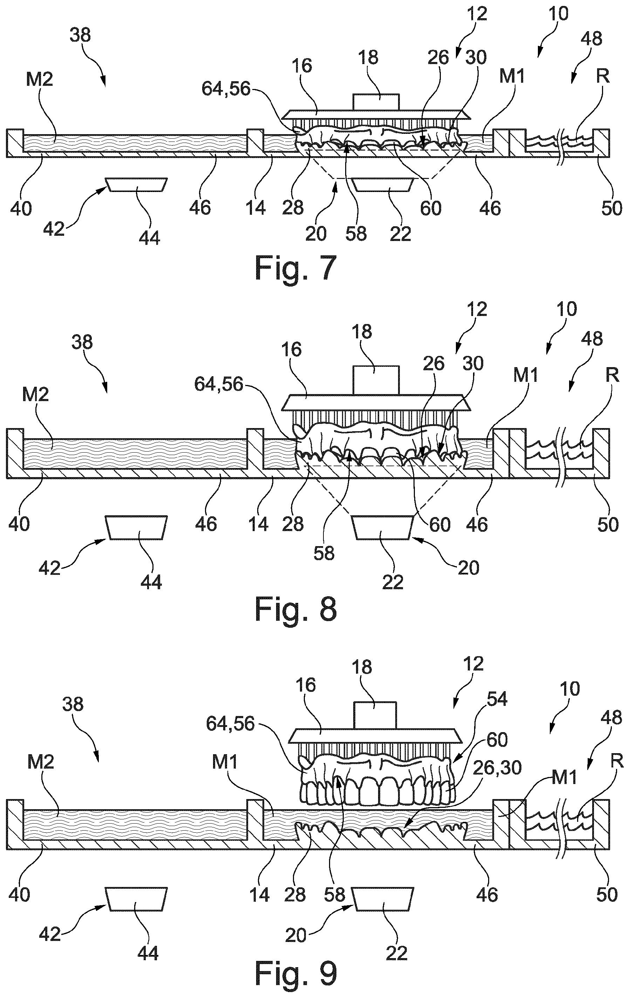

Aufgrund dessen wird im Folgenden für die erste Bauteilkomponente und die erste Dentalrestaurationskomponente dasselbe Bezugszeichen verwendet (siehe Figur 9).

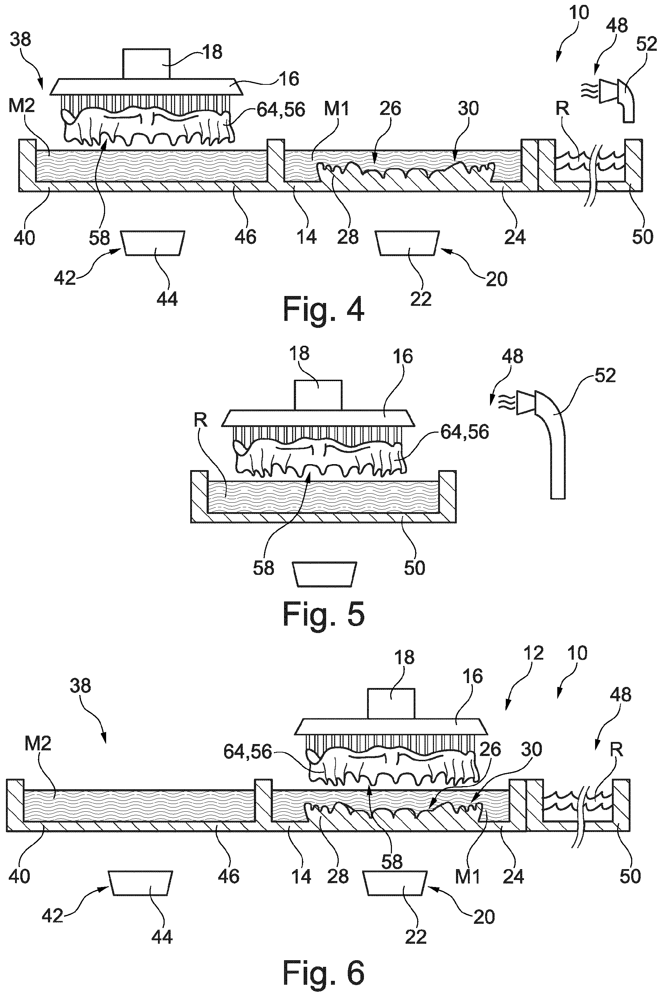

Diese wird in einem ersten Schritt mittels der weiteren Vorrichtung 38 zur schichtweisen Herstellung einer Bauteilkomponente aus dem zweiten Ausgangsmaterial M2 hergestellt, wobei die Dentalrestaurationskomponente 56 an der Bauplattform 16 angebaut wird (siehe Figur 4).

Die erste Dentalrestaurationskomponente 56 weist eine unebene Anbaufläche 58 auf, mittels der in natürlichem Zahnfleisch vorhandene Zahntaschen nachgebildet werden, in denen natürliche Zähne aufgenommen sind.

Nachdem die Herstellung einer derartigen Bauteilkomponente 56 in Form einer Dentalrestaurationskomponente 56 für sich genommen bekannt ist, wird vorliegend auf weitere Erläuterungen verzichten.

Die Figur 4 zeigt in diesem Zusammenhang einen Zustand des Systems 10, in dem die Dentalrestaurationskomponente 56 fertig hergestellt ist.

In einem optionalen zweiten Schritt wird die Dentalrestaurationskomponente 56 mittels der Reinigungseinheit 48 gereinigt. Das ist in Figur 5 illustriert. Dabei kann die Dentalrestaurationskomponente 56 zuerst in die Reinigungsflüssigkeit R eingetaucht und anschließend mit Druckluft beaufschlagt werden.

Danach wird eine zweite Bauteilkomponente 60 des Mehrkomponentenbauteils 54, d.h. der Mehrkomponenten-Dentalrestauration 54, an die Anbaufläche 58 angebaut. Vorliegend ist die zweite Bauteilkomponente 60 als Dentalrestaurationskomponente in Form einer Ersatzzahngruppierung ausgeführt. Es wird daher für die zweite Bauteilkomponente 60 und die zweite Dentalrestaurationskomponente 60 dasselbe Bezugszeichen verwendet.

Hierfür wird die Vorrichtung 12 zur schichtweisen Herstellung einer Bauteilkomponente genutzt, in deren Behältnis 14 erstes Ausgangsmaterial M1 vorhanden ist, aus dem die Dentalrestaurationskomponente 60 hergestellt werden soll.

Dabei wird zunächst die Anbaufläche 58 auf die Anschmiegfläche 26 aufgesetzt, sodass mittels der Anschmiegfläche 26 erstes Ausgangsmaterial M1 an die unebene Anbaufläche 58 der ersten Dentalrestaurationskomponente 56 angeschmiegt wird. Das ist in den Figuren 6 und 7 illustriert.

Sodann kann die zweite Dentalrestaurationskomponente 60 schichtweise an der unebenen Anbaufläche 58 der Dentalrestaurationskomponente 56 angebaut werden. In diesem Zusammenhang wird daher die Dentalrestaurationskomponente 56 auch als Trägerkomponente 64 bezeichnet.

Das ist in den Figuren 7 bis 9 illustriert, wobei die Figuren 7 und 8 Zustände zeigen, in denen die zweite Dentalrestaurationskomponente 60 noch in Herstellung befindlichen ist. Die Figur 9 zeigt einen Zustand, in dem die zweite Dentalrestaurationskomponente 60 und somit die Mehrkomponenten-Dentalrestauration 54 fertig hergestellt ist.

Wie insbesondere anhand der Figur 9 ersichtlich ist, ist es mittels der Vorrichtung 12 trotz der Wellenform 30 der Anschmiegfläche 26 möglich, die gerade abschließenden Abschnitte der zweite Dentalrestaurationskomponente 60 herzustellen, bei denen es sich im Beispiel der Figur 7 bis 9 um die Bereiche der Schneiden der hergestellten Ersatzzähne handelt.

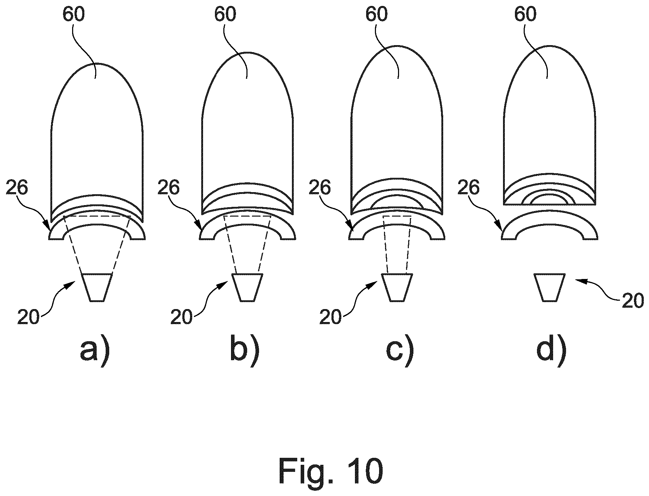

Dies kann durch einen entsprechenden Betrieb der Belichtungseinheit 20 erreicht werden, der in Figur 10 schematisch illustriert ist. Um in diesem Zusammenhang ausgehend von einer Kavität in der zweiten Dentalrestaurationskomponente 60, die in ihrer Form im Wesentlichen einem Abschnitt der Wellenform 30 der Anschmiegfläche 26 entspricht, zu einem im Wesentlichen ebenen Abschnitt der zweiten Dentalrestaurationskomponente 60 zu gelangen, kommt es darauf an, Bauteilschichten herzustellen, die sich durch einen Tiefpunkt der "aufzufüllenden" Kavität erstrecken, dabei jedoch nicht bis zu einem Rand der Kavität reichen. Auf diese Weise wird eine Tiefe der Kavität sukzessive reduziert, bis schließlich der im Wesentlichen ebene Abschnitt der zweiten Dentalrestaurationskomponente 60 entsteht. Die Figur 10 zeigt dabei in den Teilfiguren a) bis c) Zwischenschritte, in denen durch entsprechendes Aushärten von Bauteilschichten eine Tiefe der Kavität verringert ist. Das Endergebnis ist in Figur 10 d) dargestellt.

Die Bauteilschichten, die sich durch einen Tiefpunkt der "aufzufüllenden" Kavität erstrecken, dabei jedoch nicht bis zu einem Rand der Kavität reichen, können dabei hergestellt werden, indem mittels der Belichtungseinheit 20 eine Belichtung entsprechend auf einen Abschnitt der Kavität gerichtet wird, der den Tiefpunkt umfasst, jedoch nicht bis zum Rand der Kavität reicht.

Für den Fall, dass die Belichtungseinheit 20 einen Projektor, z. B. einen Digital Light Projector (DLP), umfasst, kann dieser entsprechend angesteuert werden. Dasselbe gilt, falls die Belichtungseinheit 20 einen Laser umfasst. Falls die Belichtungseinheit 20 ein Paneel, das zum Beispiel als LCD-Paneel oder als LED-Paneel ausgeführt ist, umfasst, können zur Realisierung einer derartigen Belichtung lediglich die den entsprechenden Abschnitten der Kavität zugeordneten Pixel zur Belichtung angesteuert werden, d.h. die Pixel werden ortsselektiv angesteuert.

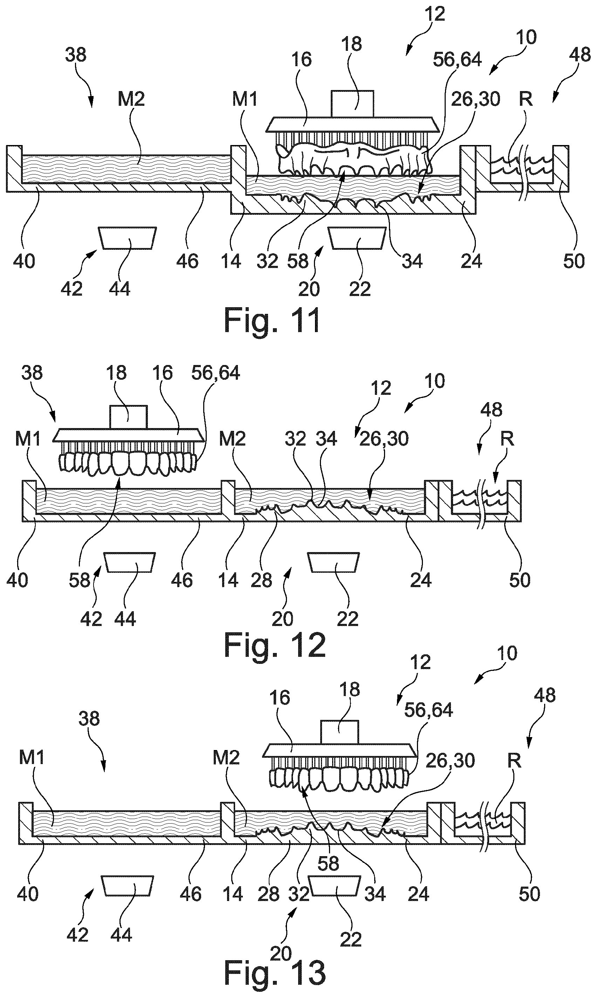

Ein erfindungsgemäßes System 10 gemäß einer zweiten Ausführungsform ist in Figur 11 dargestellt. Im Folgenden wird dabei lediglich auf die Unterschiede gegenüber dem erfindungsgemäßen System 10 gemäß der ersten Ausführungsform eingegangen. Im Übrigen gelten die vorstehenden Erläuterungen analog.

Das System 10 gemäß der zweiten Ausführungsform unterscheidet sich hinsichtlich der Vorrichtung 12 vom System 10 gemäß der ersten Ausführungsform.

Im Unterschied zur ersten Ausführungsform ist nämlich nun die Anschmiegfläche 26 in den Boden 24 eingearbeitet, d. h. direkt in den Boden 24 des Behältnisses 14 integriert, ohne Vorsprung 28. Das ist dahingehend vorteilhaft, dass auf diese Weise leicht erstes Ausgangsmaterial M1 in den Bereich der Anschmiegfläche 26 nachfließen kann.

Gemäß einer weiteren, nicht näher dargestellten Alternative, kann die Anschmiegfläche 26 auch nach unten versetzt sein, d.h. in einer Vertiefung des Bodens 24 realisiert sein.

Ein erfindungsgemäßes System 10 gemäß einer dritten Ausführungsform ist in den Figuren 12 bis 16 dargestellt. Im Folgenden wird dabei lediglich auf die Unterschiede gegenüber dem erfindungsgemäßen System 10 gemäß der ersten Ausführungsform eingegangen. Im Übrigen gelten die vorstehenden Erläuterungen analog.

Im System 10 gemäß der dritten Ausführungsform ist in der weiteren Vorrichtung 38 erstes Ausgangsmaterial M1 vorhanden. Dementsprechend wird mittels der weiteren Vorrichtung 38 in einem ersten Schritt die eine erste Bauteilkomponente 56 hergestellt. Diese ist wieder eine Dentalrestaurationskomponente 56, die im Unterschied zu den vorhergehenden Ausführungsformen nun jedoch eine Ersatzzahngruppierung ist.

Dabei weist nun die Dentalrestaurationskomponente 56 in Form der Ersatzzahngruppierung die unebene Anbaufläche 58 auf und kann somit als Trägerkomponente 64 angesehen werden.

Auch die Vorrichtung 12 unterscheidet sich von der Vorrichtung 12 des Systems 10 gemäß der ersten Ausführungsform.

Dabei ist nun im Behältnis 14 zweites Ausgangsmaterial M2 vorhanden.

Darüber hinaus ist die Anschmiegfläche 26 nun dazu ausgebildet, an die unebene Anbaufläche 58 der ersten Dentalrestaurationskomponente 56 in Form der Ersatzzahngruppierung 64 zweites Ausgangsmaterial M2 anzuschmiegen.

Dabei weist die Anschmiegfläche 26 wieder eine Wellenform 30 auf, die mehrere Wellenberge 32 und mehrere Wellentäler 34 umfasst, die alternierend angeordnet sind.

Allerdings weisen nun die Querschnitte der Wellentäler 34 Ränder auf, die als Kettenlinie ausgeführt sind. Das bedeutet, dass ein Rand jedes Querschnitts jedes Wellentals 34 als Cosinus Hyperbolicus Kurve beschrieben werden kann.

Die Querschnitte der Wellenberge 32 ergeben sich durch die Zwischenräume jeweils benachbarter Wellentäler 34.

Die übrigen Merkmale der Anschmiegfläche 26 ergeben sich analog zur Anschmiegfläche 26, die bereits im Zusammenhang mit dem System 10 gemäß der ersten Ausführungsform erläutert wurde.

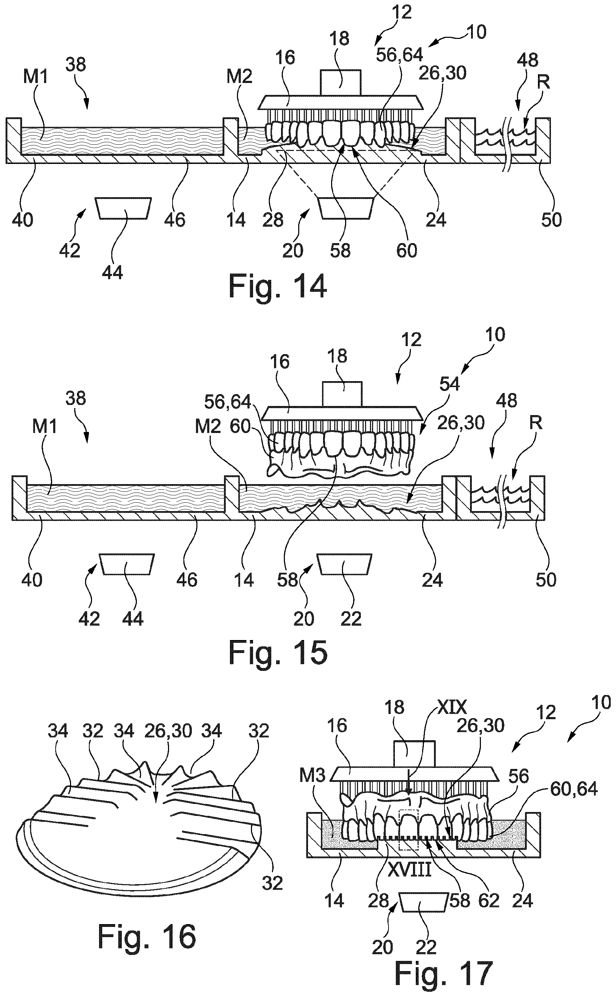

Die Anschmiegfläche 26 ist detailliert in Figur 16 dargestellt, wobei aus Gründen der besseren Übersichtlichkeit nur einige Wellenberge 32 und nur einige Wellentäler 34 mit einem Bezugszeichen versehen sind.

Wird das Verfahren zur schichtweisen Herstellung eines Mehrkomponentenbauteils 54 mittels des Systems 10 gemäß der dritten Ausführungsform ausgeführt, wird zunächst die erste Bauteilkomponente 56 in Form der Ersatzzahngruppierung mittels der weiteren Vorrichtung 38 hergestellt. Das ist in Figur 12 illustriert.

Danach wird an die Anbaufläche 58 die zweite Bauteilkomponente 60, d.h. die Prothesenbasis, schichtweise angebaut. Das ist in mehreren Zwischenzuständen in den Figuren 13 bis 15 dargestellt.

Ein erfindungsgemäßes System 10 gemäß einer vierten Ausführungsform ist in den Figuren 17 bis 19 dargestellt. Im Folgenden wird dabei lediglich auf die Unterschiede gegenüber den bereits erläuterten Ausführungsformen eingegangen.

Das System gemäß der vierten Ausführungsform umfasst eine Vorrichtung 12, mittels der sich eine sogenannte Mamelon-Geometrie in der Ersatzzahngruppierung 60 nachbilden lässt.

Die Anschmiegfläche 26 ist dementsprechend derart ausgebildet, dass sie eine Negativform dieser Mamelon-Geometrie bildet.

Das Behältnis 14 beinhaltet dementsprechend ein drittes Ausgangsmaterial M3, das dazu geeignet ist, Schneiden von Ersatzzähnen herzustellen. Mehrere Zahnschneiden können in diesem Zusammenhang auch als Zahnschneidengruppierung bezeichnet werden.

Im Zuge des Verfahrens zum Herstellen der Mehrkomponenten-Dentalrestauration 54 werden somit zunächst die erste Dentalrestaurationskomponente 56, die eine Prothesenbasis bildet, und die zweite Dentalrestaurationskomponente 60, die eine Ersatzzahnrumpfgruppierung bildet, hergestellt. Hierfür kann beispielsweise das System 10 gemäß der ersten Ausführungsform oder das System 10 gemäß der zweiten Ausführungsform verwendet werden.

Unter einer Ersatzzahnrumpfgruppierung ist dabei eine Ersatzzahngruppierung zu verstehen, bei der keine Zahnschneiden vorgesehen sind.

Die Ersatzzähne der Ersatzzahngruppierung weisen daher im Bereich der jeweiligen Zahnschneide eine Wellenkontur 66 auf, die der Mamelon-Geometrie entspricht.

Die Wellenkontur 66 stellt dementsprechend eine Anbaufläche 58 der Dentalrestaurationskomponente 60 dar, die in diesem Fall als Trägerkomponente 64 wirkt.

An diese Anbaufläche 58 wird dann unter Nutzung des Systems aus den Figuren 17 bis 19 schichtweise eine dritte Bauteilkomponente 62, die vorliegend eine dritte Dentalrestaurationskomponente in Form einer Zahnschneidengruppierung ist, aus dem dritten Ausgangsmaterial M3 angebaut.

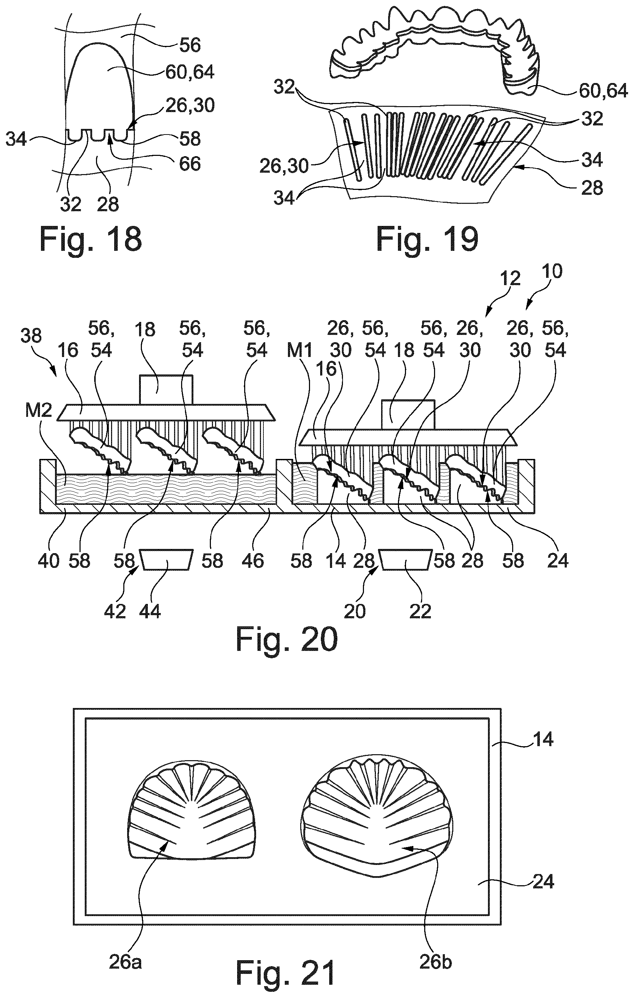

Ein erfindungsgemäßes System 10 gemäß einer fünften Ausführungsform ist in Figur 20 dargestellt. Im Folgenden wird dabei lediglich auf die Unterschiede gegenüber den bereits erläuterten Ausführungsformen eingegangen. Das System 10 gemäß der fünften

Ausführungsform kann dabei als Variante des Systems 10 gemäß der ersten Ausführungsform verstanden werden

Allerdings ist das System 10 gemäß der fünften Ausführungsform dazu ausgebildet, zeitgleich insgesamt hier beispielsweise drei Mehrkomponentenbauteile 54 in Form von drei Mehrkomponenten-Dentalrestaurationen 54 herzustellen. Dabei werden alle drei Mehrkomponenten-Dentalrestaurationen 54 an der Bauplattform 16 angebaut. Dem besseren Verständnis wegen ist dabei die Bauplattform 16 mit dem Antrieb 18 und den daran angebauten Bauteilkomponenten 56 zwei Mal dargestellt, obwohl in der Realität lediglich eine einzige Bauplattform vorhanden ist.

Dementsprechend sind im Inneren des Behältnisses 14 insgesamt hier beispielsweise drei Anschmiegflächen 26 vorhanden, die identisch ausgebildet sind. Selbstverständlich ist es in anderen Ausführungsformen auch denkbar, mehrere Anschmiegflächen 26 vorzusehen, die unterschiedlich sind. Beispielsweise können drei unterschiedliche Anschmiegflächen 26 vorgesehen werden.

Um im Inneren des Behältnisses 14 Platz zu sparen, sind die Anschmiegflächen 26 zudem geneigt angeordnet.

Im Übrigen kann auf die Ausführungen zur ersten Ausführungsform des Systems 10 verwiesen werden.

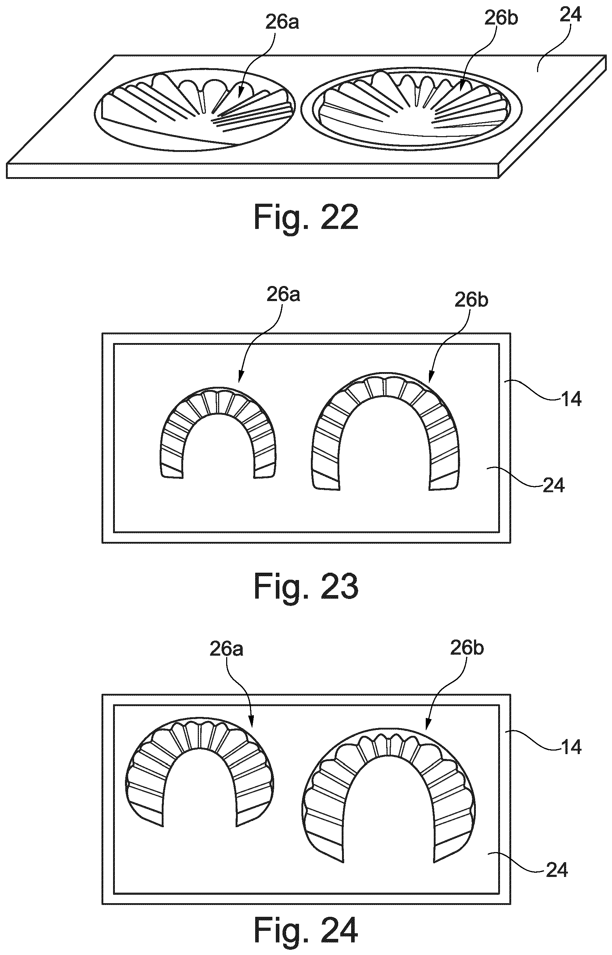

Die Figuren 21 und 22 zeigen ein alternatives Behältnis 14 für ein erfindungsgemäßes System 10 zur schichtweisen Herstellung eines Mehrkomponentenbauteils gemäß einer sechsten Ausführungsform. Wieder wird lediglich auf die Unterschiede gegenüber den bereits erläuterten Ausführungsformen eingegangen.

Im Boden 24 des Behältnisses 14 sind wieder insgesamt zwei Anschmiegflächen 26a, 26b vorgesehen, wobei die Anschmiegfläche 26b als zusätzliche unebenen Anschmiegfläche 26b bezeichnet werden kann.

Im Unterschied zum System 10 gemäß der fünften Ausführungsform sind diese Anschmiegflächen 26a, 26b jedoch nicht identisch ausgeführt.

Die Anschmiegfläche 26a entspricht der Anschmiegfläche 26 des Systems 10 gemäß der ersten Ausführungsform. Wie dort erläutert, ist diese Anschmiegfläche 26a dazu ausgebildet, eine Vollprothese für einen menschlichen Oberkiefer herzustellen.

Die Anschmiegfläche 26b ist dazu ausgebildet, eine dentale Vollprothese für einen menschlichen Unterkiefer herzustellen.

Die Vorrichtung 12 oder das System 10, das das Behältnis 14 mit den Anschmiegflächen 26a, 26b umfasst, kann also sowohl zur Herstellung einer dentalen Vollprothese für den Oberkiefer als auch zur Herstellung einer dentalen Vollprothese für den Unterkiefer verwendet werden.

Die Figur 23 zeigt ein alternatives Behältnis 14 für ein erfindungsgemäßes System 10 zur schichtweisen Herstellung eines Mehrkomponentenbauteils gemäß einer siebten Ausführungsform. Wieder wird lediglich auf die Unterschiede gegenüber den bereits erläuterten Ausführungsformen eingegangen.

Beim Behältnis 14 aus Figur 23 sind die Anschmiegflächen 26 in einer Draufsicht insgesamt bogenförmig, sodass mittels jeder der Anschmiegflächen 26 Ausgangsmaterial an eine ganz oder teilweise einem menschlichen Kieferbogen folgende Trägerkomponente 64 angeschmiegt werden kann.

Im Beispiel aus Figur 23 sind dabei beide Anschmiegflächen 26 zur Herstellung einer dentalen Vollprothese für einen Oberkiefer ausgebildet. Die beiden Anschmiegflächen unterscheiden sich lediglich durch ihre Größe.

Die Ausführungen zur Gestalt der Anschmiegflächen, die im Zusammenhang mit der ersten Ausführungsform gemacht wurden, gelten für das Beispiel aus Figur 23 in entsprechender

Weise, da die bogenförmigen Anschmiegflächen jeweils einem Randabschnitt der im Zusammenhang mit der ersten Ausführungsform erläuterten Anschmiegfläche 26 entsprechen.

Die Figur 24 zeigt ein weiteres alternatives Behältnis 14 für ein erfindungsgemäßes System 10 zur schichtweisen Herstellung eines Mehrkomponentenbauteils gemäß einer achten Ausführungsform. Wieder wird lediglich auf die Unterschiede gegenüber den bereits erläuterten Ausführungsformen eingegangen. Dabei kann die Variante aus der Figur 24 als Abwandlung der Variante aus Figur 23 verstanden werden. Das Behältnis 14 aus Figur 24 ist dabei für die Herstellung einer dentalen Vollprothese für einen Unterkiefer ausgebildet. Im Übrigen gilt dasselbe wie bereits zur Ausführungsform gemäß Figur 23 erläutert.

In allen zuvor erläuterten Ausführungsformen kann die Anschmiegfläche 26 mit einer Anti-Haftbeschichtung oder einer Anti-Haft-Schicht versehen sein, die als integraler Bestandteil der Anschmiegfläche 26 ausgeführt ist.

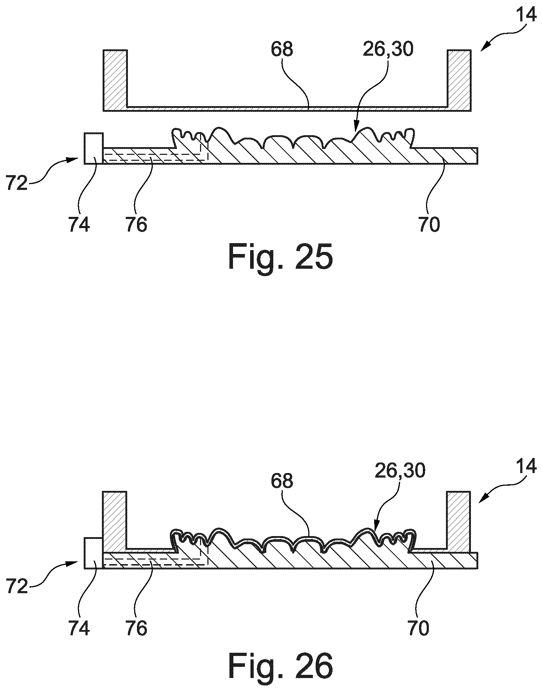

Alternativ hierzu umfasst der Boden 24 des Behältnisses 14 eine formflexible Folie 68, die die unebene Anschmiegfläche 26 bedeckt. Genauer gesagt liegt die formflexible Folie 68 an der unebenen Anschmiegfläche 26 derart an, dass die formflexible Folie 68 genau der Geometrie der Anschmiegfläche 26 folgt. Diese Alternative ist in den Figuren 25 und 26 illustriert.

Dabei ist der Boden 24 sozusagen zweiteilig ausgeführt und umfasst neben der formflexiblen Folie 68 auch eine Stützplatte 70, an der die unebene Anschmiegfläche 26 vorgesehen ist.

Bei einer solchen Konfiguration des Behältnisses 14 dichtet die formflexible Folie 68 das Behältnis 14 nach unten hin ab. Die Stützplatte 70 mit der Anschmiegfläche 26 dient dazu, das Behältnis 14 und das darin aufgenommene Ausgangsmaterial mechanisch zu stabilisieren, d.h. abzustützen.

Im dargestellten Ausführungsbeispiel ist dabei die Stützplatte 70 inklusive der Anschmiegfläche 26 aus einem Glasmaterial hergestellt.

Um ein derartiges Behältnis 14 herzstellen, muss somit die formflexible Folie 68 an die Anschmiegfläche 26 angelegt werden und relativ zur Anschmiegfläche 26 lagefixiert werden. Dies wird aus einer Zusammenschau der Figuren 25 und 26 deutlich, wobei die Figur 25 einen ersten Zustand des Behältnisses 14 zeigt, in dem die formflexible Folie 68 noch nicht an die Anschmiegfläche 26 angelegt ist und die Figur 26 einen zweiten Zustand zeigt, in dem die formflexible Folie 68 derart an die Anschmiegfläche 26 angelegt ist, dass die formflexible Folie 68 exakt einer Geometrie der Anschmiegfläche folgt.

Im Betrieb eines solchen Behältnisses 14, d.h. wenn das Behältnis 14 zur Aufnahme von Ausgangsmaterial zum Herstellen einer Bauteilkomponente verwendet wird, liegt also die formflexible Folie 68 stets zwischen dem im Behältnis 14 aufgenommenen Ausgangsmaterial und der Anschmiegfläche 26. Es wird folglich das Ausgangsmaterial mittels der Anschmiegfläche 26 und unter zusätzlicher Nutzung der formflexiblen Folie 68 an die Trägerkomponente 64 angeschmiegt.

Optional kann ein solches Behältnis 14 oder eine das Behältnis umfassende Vorrichtung 12 auch eine Druckeinheit 72 umfassen, die zum Anlegen der formflexiblen Folie 68 an die Anschmiegfläche 26 mittels Unterdrucks oder mittels Überdrucks ausgebildet ist.

Im dargestellten Ausführungsbeispiel ist die Druckeinheit 72 durch eine Unterdruckerzeugungseinheit 74 und einen Strömungskanal 76 repräsentiert.

Es lässt sich somit mittels der Unterdruckerzeugungseinheit 74 und dem Strömungskanal 76 die formflexible Folie 68 an eine Geometrie der Anschmiegfläche 26 derart ansaugen, dass die formflexible Folie der Geometrie der Anschmiegfläche 26 präzise folgt.

Beispielsweise ist die formflexible Folie 68 als Teflonfolie ausgeführt.

Es versteht sich, dass auch wenn die Figuren 25 und 26 das Behältnis 14 mit zweiteiligem Bodenaufbau lediglich schematisch zeigen, alle Behältnisse 14, die im Zusammenhang mit den vorstehenden Ausführungsformen erläutert wurden, den in den Figuren 25 und 26 gezeigten Aufbau haben können.

Es versteht sich ferner, dass auch wenn vorstehend voneinander separate Ausführungsformen erläutert wurden, es selbstverständlich möglich ist, diese Ausführungsformen miteinander zu kombinieren. In diesem Zusammenhang lassen sich beispielsweise Behältnisse 14, die im Zusammenhang mit den Figuren 21 bis 24 verwendet wurden, in einem der Systeme 10 verwenden, die im Zusammenhang mit den Figuren 1 bis 16 erläutert wurden.

Zudem versteht es sich, dass das Behältnis 14 vorstehend zwar als Bestandteil einer Vorrichtung 12 zur schichtweisen Herstellung einer Bauteilkomponente und als Bestandteil eines System 10 zur schichtweisen Herstellung eines Mehrkomponentenbauteils erläutert wurde, dies aber nicht zwingend der Fall sein muss. Vielmehr ist es auch möglich, das Behältnis 14 alleinstehend, d.h. für sich genommen vorzusehen. In diesem Fall kann das Behältnis 14 beispielsweise dazu vorgesehen sein, in einer Vorrichtung zur schichtweisen Herstellung einer Bauteilkomponente oder in einem System zur schichtweisen Herstellung eines Mehrkomponentenbauteils ein dort bereits vorhandenes Behältnis zu ersetzen. Das Behältnis 14 kann somit einerseits als Ersatzteil verwendet werden, andererseits aber auch als Aufrüst-Komponente. Im letztgenannten Fall lassen sich mittels des Behältnisses also Vorrichtungen und Systeme zur schichtweisen Herstellung eines Mehrkomponentenbauteils aufrüsten, d.h. in ihrer Funktion verbessern und/oder erweitern.

Auch für die Vorrichtung 12 zur schichtweisen Herstellung einer Bauteilkomponente, die vorliegend als Bestandteil eines System 10 zur schichtweisen Herstellung eines Mehrkomponentenbauteils erläutert wurde, gilt, dass die Vorrichtung 12 nicht zwingend in dieser Weise ausgeführt sein muss. Vielmehr ist es auch möglich, die Vorrichtung 12 alleinstehend, d.h. für sich genommen zu verwenden. Dasselbe gilt für die Reinigungseinheit 48.

Auch versteht es sich, dass anhand der Figuren Vorrichtungen und Systeme zur schichtweisen Herstellung eines Mehrkomponentenbauteils erläutert wurden, bei denen die Bauplattform oberhalb der Belichtungseinheit angeordnet ist. Genauer gesagt ist die Belichtungseinheit unterhalb des Behältnisses angeordnet und die Bauplattform innerhalb oder oberhalb des Behältnisses. Bei der schichtweisen Herstellung einer Bauteilkomponente, insbesondere einer Dentalrestaurationskomponente, wird somit die Bauplattform sukzessive aus dem Behältnis herausgefahren, d.h. vom Boden des Behältnisses wegbewegt ("bottom up"). Die vorstehenden Erläuterungen gelten jedoch auch für eine Alternative, in der die Belichtungseinheit oberhalb der Bauplattform angeordnet ist, d.h. für eine Alternative, in der die Bauplattform innerhalb eines Behältnisses angeordnet und die Belichtungseinheit oberhalb des Behältnisses. Bei der schichtweisen Herstellung einer Bauteilkomponente, insbesondere einer Dentalrestaurationskomponente, wird in dieser Alternative die Bauplattform sukzessive tiefer ins Behältnis hineingefahren, d.h. zum Boden des Behältnisses hin bewegt ("top down").

Ferner versteht es sich, dass auch wenn die Systeme 10 zur schichtweisen Herstellung eines Mehrkomponentenbauteils und die Vorrichtungen 12 zur schichtweisen Herstellung einer Bauteilkomponente vorliegend anhand der Herstellung von Mehrkomponenten-Dentalrestaurationen mit zwei oder mehr Dentalrestaurationskomponenten erläutert wurden, mittels der Systeme 10 und der Vorrichtungen 12 auch Mehrkomponentenbauteile und zugehörige Bauteilkomponenten für andere Anwendungen hergestellt werden können. In diesem Zusammenhang können beispielsweise Mehrkomponentenbauteile und Bauteilkomponenten hergestellt werden, die Schmuckstücke oder Schmuckstückkomponenten sind. Alternativ oder zusätzlich können Mehrkomponentenbauteile und Bauteilkomponenten hergestellt werden, die Mehrkomponentenprothesen oder zugehörige Prothesenkomponenten sind. Weiter alternativ oder zusätzlich können Mehrkomponentenbauteile und Bauteilkomponenten hergestellt werden, die Mehrkomponentenimplantate oder zugehörige Implantatskomponenten sind. Weiter alternativ oder zusätzlich können Mehrkomponentenbauteile und Bauteilkomponenten hergestellt werden, die Mehrkomponenten-Orthesenphantome oder zugehörige Orthesenphantomkomponenten für die medizinische Bildgebung sind.

### Bezugszeichenliste

- 10: System zur schichtweisen Herstellung eines Mehrkomponentenbauteils
- 12: Vorrichtung zur schichtweisen Herstellung einer Bauteilkomponente
- 14: Behältnis
- 16: Bauplattform
- 18: Antrieb
- 20: Belichtungseinheit
- 22: Lichtquelle
- 24: Boden des Behältnisses
- 26: Anschmiegfläche
- 26a: Anschmiegfläche
- 26b: Anschmiegfläche
- 28: Vorsprung
- 30: Wellenform
- 32: Wellenberg
- 34: Wellental
- 36: Mittellinie
- 38: weitere Vorrichtung zur schichtweisen Herstellung einer Bauteilkomponente
- 40: Behältnis der weiteren Vorrichtung
- 42: Belichtungseinheit der weiteren Vorrichtung
- 44: Lichtquelle der Belichtungseinheit der weiteren Vorrichtung
- 46: Boden des Behältnisses der weiteren Vorrichtung
- 48: Reinigungseinheit
- 50: Behältnis
- 52: Druckluftvorrichtung
- 54: Mehrkomponentenbauteil, Mehrkomponenten-Dentalrestauration
- 56: Bauteilkomponente, Dentalrestaurationskomponente
- 58: Anbaufläche
- 60: Bauteilkomponente, Dentalrestaurationskomponente
- 62: Bauteilkomponente, Dentalrestaurationskomponente
- 64: Trägerkomponente
- 66: Wellenkontur, Mamelon-Geometrie
- 68: formflexible Folie
- 70: Stützplatte
- 72: Druckeinheit
- 74: Unterdruckerzeugungseinheit
- 76: Strömungskanal

- B: Breite
- H: Höhe
- M1: erstes Ausgangsmaterial
- M2: zweites Ausgangsmaterial
- M3: drittes Ausgangsmaterial
- R: Reinigungsflüssigkeit

## Patentansprüche

1. Vorrichtung (12) zur schichtweisen Herstellung einer Bauteilkomponente (56, 60, 62), insbesondere einer Dentalrestaurationskomponente, aus photosensitivem Ausgangsmaterial (M1, M2, M3), umfassend
ein Behältnis (14) zur Aufnahme des Ausgangsmaterials (M1, M2, M3),
eine Bauplattform (16), an der die Bauteilkomponente (56, 60, 62) schichtweise aufbaubar ist, wobei die Bauplattform (16) und das Behältnis (14) relativ zueinander beweglich gelagert sind, und
eine Belichtungseinheit (20) zum ortsspezifischen Aushärten von innerhalb des Behältnisses (14) vorhandenem Ausgangsmaterial (M1, M2, M3),
wobei innerhalb des Behältnisses (14) oder an einem Boden (24) des Behältnisses (14) eine unebene Anschmiegfläche (26) vorhanden ist, die dazu ausgebildet ist, im Behältnis (14) vorhandenes Ausgangsmaterial (M1, M2, M3) an eine unebene Anbaufläche (58) einer Trägerkomponente (64), insbesondere einer weiteren Dentalrestaurationskomponente, anzuschmiegen, sodass die Bauteilkomponente (56, 60, 62) schichtweise an der unebenen Anbaufläche (58) der Trägerkomponente (64) anbaubar ist.

2. Vorrichtung (12) nach Anspruch 1,
wobei die Belichtungseinheit (20) außerhalb des Behältnisses (14) angeordnet ist und die Belichtungseinheit (20) lichtleitend mit der Anschmiegfläche (26) gekoppelt ist oder wobei die Anschmiegfläche (26) als integraler Bestandteil der Belichtungseinheit (20) ausgebildet ist.

3. Vorrichtung (12) nach Anspruch 1 oder 2, wobei die Anschmiegfläche (26) als Grenzfläche eines vom Boden (24) vorstehenden Vorsprungs (28) ausgeführt ist oder wobei die Anschmiegfläche (26) zumindest abschnittsweise in den Boden (24) eingearbeitet ist.

4. Vorrichtung (12) nach einem der vorhergehenden Ansprüche, wobei der Boden (24) des Behältnisses (14) eine formflexible Folie (68) umfasst, die die unebene Anschmiegfläche (26) bedeckt.

5. Vorrichtung nach Anspruch 4, ferner umfassend eine Druckeinheit (72), die zum Anlegen der formflexiblen Folie (68) an die Anschmiegfläche (26) mittels Unterdrucks oder Überdrucks ausgebildet ist.

6. Vorrichtung (12) nach einem der vorhergehenden Ansprüche,
wobei die Anschmiegfläche (26) in einer Draufsicht insgesamt bogenförmig ist oder
wobei die Anschmiegfläche (26) in der Draufsicht ein bogenförmiges Flächensegment umfasst, und
wobei die insgesamt bogenförmige Anschmiegfläche (26) oder das bogenförmige Flächensegment zum Anschmiegen von Ausgangsmaterial (M1, M2, M3) an eine ganz oder teilweise einem menschlichen Kieferbogen folgende Trägerkomponente (64) dimensioniert ist.

7. Vorrichtung (12) nach einem der vorhergehenden Ansprüche, wobei die Anschmiegfläche (26) eine Wellenform (30) aufweist, welche mehrere Wellenberge (32, 32a bis 32n) und mehrere Wellentäler (34, 34a bis 34m) umfasst, wobei die Wellenberge (32, 32a bis 32n) und die Wellentäler (34, 34a bis 34m) alternierend angeordnet sind.

8. Vorrichtung (12) nach Anspruch 7, wobei die Wellenform (30) zumindest abschnittsweise im Wesentlichen als Sinuswelle oder als Kettenlinie oder als Polygonprofil oder als Mischform von wenigstens zwei aus Sinuswelle, Kettenlinie und Polygonprofil ausgebildet ist.

9. Vorrichtung (12) nach Anspruch 7 oder 8, wobei die Wellenform (30) Wellenberge (32, 32a bis 32n) und Wellentäler (34, 34a bis 34m) mit unterschiedlichen Höhen (H) und/oder mit unterschiedlichen Breiten (B) umfasst.

10. Vorrichtung (12) nach einem der Ansprüche 7 bis 9, wobei eine Höhe (H) und/oder eine Breite (B) eines oder mehrerer Wellenberge (32, 32a bis 32n) mit zunehmendem Abstand von einem Mittelpunkt oder von einer Mittellinie (36) zunimmt.

11. Vorrichtung (12) nach Anspruch 6 und einem der Ansprüche 7 bis 10, wobei eine Breite (B) der Wellenberge (32, 32a bis 32n) und/oder eine Breite (B) der Wellentäler (34, 34a bis 34m) entlang der bogenförmigen Anschmiegfläche (26) oder des bogenförmigen Flächensegments variiert.

12. Vorrichtung (12) nach einem der vorhergehenden Ansprüche, wobei innerhalb des Behältnisses (14) oder an einem Boden (24) des Behältnisses (14) eine zusätzliche unebene Anschmiegfläche (26, 26b) vorhanden ist, die dazu ausgebildet ist, Ausgangsmaterial (M1, M2, M3) an eine zusätzliche unebene Anbaufläche (58) einer Trägerkomponente (64) anzuschmiegen, sodass die Bauteilkomponente (56, 60, 62) an der unebenen Anbaufläche (58) der Trägerkomponente (64) anbaubar ist.

13. Behältnis (14) für eine Vorrichtung (12) nach einem der vorhergehenden Ansprüche zur schichtweisen Herstellung einer Bauteilkomponente (56, 60, 62), insbesondere einer Dentalrestaurationskomponente, aus photosensitivem Ausgangsmaterial (M1, M2, M3), wobei innerhalb des Behältnisses (14) oder an einem Boden (24) des Behältnisses (14) eine unebene Anschmiegfläche (26) vorhanden ist, die dazu ausgebildet ist, im Behältnis (14) vorhandenes Ausgangsmaterial (M1, M2, M3) an eine unebene Anbaufläche (58) einer Trägerkomponente (64) anzuschmiegen, sodass die Bauteilkomponente (56, 60, 62) an der unebenen Anbaufläche (58) der Trägerkomponente (64) schichtweise anbaubar ist.

14. System (10) zur schichtweisen Herstellung eines Mehrkomponentenbauteils (54), insbesondere einer Mehrkomponenten-Dentalrestauration, aus wenigstens einem ersten photosensitiven Ausgangsmaterial (M1) und einem zweiten photosensitiven Ausgangsmaterial (M2), umfassend
eine Vorrichtung (12) nach einem der Ansprüche 1 bis 12, deren Behältnis (14) zur Aufnahme des ersten Ausgangsmaterials (M1) oder des zweiten Ausgangsmaterials (M2) vorgesehen ist, und
zumindest ein weiteres Behältnis (40) zur Aufnahme des jeweils anderen aus photosensitivem ersten Ausgangsmaterial (M1) und photosensitivem zweiten Ausgangsmaterial (M2),
wobei die Bauplattform (16) der Vorrichtung (12) nach einem der Ansprüche 1 bis 12 auch zum Zusammenwirken mit dem weiteren Behältnis (40) ausgebildet ist.

15. System (10) nach Anspruch 14, ferner umfassend eine Reinigungseinheit (48) zum Reinigen wenigstens einer Bauteilkomponente (56, 60, 62) des Mehrkomponentenbauteils (54).

16. Verfahren zur schichtweisen Herstellung eines Mehrkomponentenbauteils (54), insbesondere einer Mehrkomponenten-Dentalrestauration, aus wenigstens einem ersten photosensitiven Ausgangsmaterial (M1) und einem zweiten photosensitiven Ausgangsmaterial (M2), umfassend
- schichtweises Herstellen einer ersten Bauteilkomponente (56, 60, 62) des Mehrkomponentenbauteils (54) aus dem ersten photosensitiven Ausgangsmaterial (M1) oder aus dem zweiten photosensitiven Ausgangsmaterial (M2), wobei die erste Bauteilkomponente (56, 60, 62) eine unebene Anbaufläche (58) aufweist, die zum Anbauen einer zweiten Bauteilkomponente (56, 60, 62) des Mehrkomponentenbauteils (54) vorgesehen ist, und
- schichtweises Anbauen der zweiten Bauteilkomponente (56, 60, 62) des Mehrkomponentenbauteils (54) aus dem jeweils anderen aus erstem photosensitiven Ausgangsmaterial (M1) und zweitem photosensitiven Ausgangsmaterial (M2), wobei die zweite Bauteilkomponente (56, 60, 62) an die unebene Anbaufläche (58) der ersten Bauteilkomponente (56, 60, 62) angebaut wird und wobei mittels einer Anschmiegfläche (26) das jeweils andere aus erstem photosensitiven Ausgangsmaterial (M1) und zweitem photosensitiven Ausgangsmaterial (M2) an die unebene Anbaufläche (58) der ersten Bauteilkomponente (56, 60, 62) angeschmiegt wird.

17. Verfahren nach Anspruch 16, ferner umfassend: Reinigen der ersten Bauteilkomponente (56, 60, 62) vor dem Anbauen der zweiten Bauteilkomponente (56, 60, 62).
